(19) **Europäisches Patentamt / European Patent Office / Office européen des brevets**

(11) **EP 1 897 252 B1**

(12) **EUROPÄISCHE PATENTSCHRIFT**

(45) Veröffentlichungstag und Bekanntmachung des Hinweises auf die Patenterteilung:
**29.02.2012 Patentblatt 2012/09**

(21) Anmeldenummer: **06742293.1**

(22) Anmeldetag: **26.04.2006**

(51) Int Cl.:
**H04B 10/10** (2006.01)

(86) Internationale Anmeldenummer:
**PCT/DE2006/000750**

(87) Internationale Veröffentlichungsnummer:
**WO 2006/136126 (28.12.2006 Gazette 2006/52)**

(54) **DYNAMISCHES DATENRATENADAPTIVES SIGNALVERARBEITUNGSVERFAHREN IN EINEM DRAHTLOSEN INFRAROT-DATENÜBERTRAGUNGSSYSTEM**

DYNAMIC DATA-RATE ADAPTIVE SIGNAL PROCESSING METHOD IN A WIRELESS INFRA-RED DATA TRANSFER SYSTEM

PROCEDE DE TRAITEMENT DE SIGNAL A ADAPTATION DYNAMIQUE AU DEBIT DE DONNEES, DANS UN SYSTEME DE TRANSMISSION DE DONNEES INFRAROUGE SANS FIL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.06.2005 DE 102005030299**

(43) Veröffentlichungstag der Anmeldung:
**12.03.2008 Patentblatt 2008/11**

(73) Patentinhaber: **Fraunhofer-Gesellschaft zur Förderung der angewandten Forschung e.V.
80686 München (DE)**

(72) Erfinder:
- **GRUBOR, Jelena**
  **13629 Berlin (DE)**
- **JUNGNICKEL, Volker**
  **10318 Berlin (DE)**
- **LANGER, Klaus-Dieter**
  **10781 Berlin (DE)**
- **VON HELMOLT, Clemens**
  **12205 Berlin (DE)**

(74) Vertreter: **Goeden, Christian et al
Andrae Flach Haug
Patentanwälte
Balanstrasse 55
81541 München (DE)**

(56) Entgegenhaltungen:
- **GRUBOR J ET AL: "Capacity analysis in indoor wireless infrared communication using adaptive multiple subcarrier transmission" TRANSPARENT OPTICAL NETWORKS, 2005, PROCEEDINGS OF 2005 7TH INTERNATIONAL CONFERENCE BARCELONA, CATLONIA, SPAIN JULY 3-7, 2005, PISCATAWAY, NJ, USA,IEEE, 3. Juli 2005 (2005-07-03), Seiten 171-174, XP010834591 ISBN: 0-7803-9236-1**
- **THOMAS KELLER ET AL: "Adaptive Multicarrier Modulation: A Convenient Framework for Time-Frequency Processing in Wireless Communications" PROCEEDINGS OF THE IEEE, IEEE. NEW YORK, US, Bd. 88, Nr. 5, Mai 2000 (2000-05), XP011044362 ISSN: 0018-9219 in der Anmeldung erwähnt**
- **DIANA L ET AL: "Rate-adaptive modulation techniques for infrared wireless communications" COMMUNICATIONS, 1999. ICC '99. 1999 IEEE INTERNATIONAL CONFERENCE ON VANCOUVER, BC, CANADA 6-10 JUNE 1999, PISCATAWAY, NJ, USA,IEEE, US, 6. Juni 1999 (1999-06-06), Seiten 597-603, XP010333787 ISBN: 0-7803-5284-X in der Anmeldung erwähnt**

**EP 1 897 252 B1**

## Beschreibung

Die Erfindung bezieht sich auf ein dynamisches datenratenadaptives Signalverarbeitungsverfahren für die Übertragung von Datensignalen mit einer vorgegebenen Signalleistung in einem drahtlosen Infrarot-Datenübertragungssystem mit einem ungerichteten, bidirektional betreibbaren optischen Übertragungskanal mit Infrarotlicht einer vorgegebenen Frequenz zwischen einem stationären Sender und einem mobilen Empfänger im Innenraumbereich.

Die Vorteile der Infrarotübertragung - sehr große, freie und verfügbare Bandbreite, keine beeinträchtigende Überlagerung mit Funksystemen, Benutzung gleicher Arbeitsfrequenzen in benachbarten Sendesystemen, hohe Datensicherheit, definierte Begrenzung der Datenübertragung an Wänden - machen sie zu einer nutzbaren und attraktiven Technologie für Innenraumkommunikation, beispielsweise in Büros, Krankenhäusern oder Flugzeugen.

Im Forschungsgebiet der drahtlosen, ungerichteten Infrarot-Kommunikation im Innenraumbereich erreichen bekannte Systeme eine hohe Datenrate durch winklig (engl. angular) oder räumlich (engl. spatial) gerichtete Diversität. Aus dem Stand der Technik bekannte optische Systeme mit Diversität benötigen jedoch relativ komplexe optische Systeme (winkeldiverse Empfänger oder Mehrstrahlsender oder beides). Daher sind auch elektronische Signalverarbeitungsverfahren, die zur Verbesserung von Funksystemen eingesetzt werden, sinnvoll für die Infrarotübertragung. Da diese beiden Medien jedoch grundsätzlich andere Eigenschaften aufweisen, kann eine einfache Anwendung der bekannten Funkkanaltechniken auf den Infrarotkanal nicht erfolgen, sondern erfordert eigene Untersuchungen. Aufgrund der hohen Dynamik bezüglich Bandbreite und Leistung der Übertragungsantwort des Infrarotkanals, die in erster Linie von der Qualität der Sichtverbindung (LOS, Line of Sight) zwischen Sender und Empfänger abhängt, ist es schwierig, ein gutes Signal-Rausch-Verhältnis für hohe Datenraten unter Verwendung angemessener Datensignalleistungen zu erreichen. Um den Nutzergebrauch und die Nutzermobilität ohne Signalunterbrechungen zu gewährleisten, werden die bekannten Infrarotsysteme statisch so ausgelegt, dass eine zuverlässige Signalausbreitung im gesamten Innenraum erreicht wird. Das System wird dabei für den schlechtesten Ausbreitungsfall ausgelegt. Dadurch bleibt aber ein großer Betrag der Kanalkapazität, die unter guten Übertragungsbedingungen zur Verfügung steht, ungenutzt. Um aber die System-Datenrate zu maximieren und dabei trotzdem die sichere Übertragung und die volle Raumabdeckung zu gewährleisten, muss das Übertragungssystem adaptiv bezüglich der Datenübertragungsrate gestaltet, das heißt, dynamisiert werden. Dies erlaubt - bei Kenntnis des Verhaltens des Übertragungskanals - unter nachteiligen Bedingungen eine Senkung der Übertragungsgeschwindigkeit bis zum Erreichen einer vorgegebenen Fehlerwahrscheinlichkeit. Bei der adaptiven Signalprozessierung werden die Daten, ausgehend von einer Kanalschätzung, zeit- oder frequenzbezogen aufbereitet und gesendet. Über einen Rückkanal werden die aktuellen Kanaleigenschaften entsprechend dem Zeit- oder Frequenzbezug vom Empfänger zum Sender zurückgeführt und dort in die adaptive Signalprozessierung einbezogen. Ein adaptives System stellt daher einen geschlossenen Regelkreis dar und bewirkt eine automatische Anpassung der Datenübertragungsrate im Zeit- oder Frequenzbereich in Abhängigkeit von der aktuellen Übertragungsqualität im Kanal. Durch die Auslegung auf den aktuellen Kanalzustand und nicht auf den schlechtesten Kanalzustand kann eine wesentlich höhere Datenrate und bessere Ausnutzung der Signalleistung erreicht werden.

## Stand der Technik

Ein physikalisches Modell des drahtlosen Infrarot-Datenübertragungssystems mit einem ungerichteten optischen Übertragungskanal zwischen einem stationären Sender und einem mobilen Empfänger im Innenraumbereich ist aus der **Veröffentlichung I** "A Physical Model of the Wireless Infrared Communication Channel" von V. Jungnickel et al. (in IEEE Journal on Selected Areas in Communications, Vol. 20, No.3, April 2002, p. 631-640) bekannt. Durchgeführte Messungen für ein derartiges Kommunikationssystem wurden schon in der **Veröffentlichung II** "Indoor Propagation Measurements at Infrared Frequencies for Wireless Local Area Networks Applications" von H. Hashemi et al. (in Proc. of Vehicular Technology Conference, vol. 43, No. 3, August 1994, pp. 562-576) bekannt gemacht. Die Anwendung von Vielfachsendern in Kombination mit winkeldiversen Empfängern zur Erreichung winkliger Diversität in einem ungerichteten optischen Übertragungskanal ist aus der **Veröffentlichung III** "Angle Diversity for Nondirected Wireless Infrared Communication" von J.B. Carruthers et al. (in IEEE Transactions on Communications, Vol. 48, No. 6, June 2000, pp. 960-969) bekannt. Es wird eine Methode mit einem statischen Kanal im Innenraum offenbart, der für den schlechtesten Übertragungsfall ausgelegt ist. Nachteilig ist hier einerseits die unbefriedigende Ausnutzung der zur Verfügung stehen Kanalkapazität und andererseits der relativ große Ausrüstungsaufwand durch ein Nachführsystem und eine komplexe Optik. Der Wunsch nach einer effizienten Ausnutzung der Kanalkapazität führt zur Auslegung eines adaptiven Systems. Die Erreichung von gerichteten Verbindungen zwischen Sender und Empfänger durch nachführende Trackingsysteme zur Erzielung einer räumlichen Diversität ist aus der **Veröffentlichung IV** "Electronic Tracking for Wireless Infrared Communications" von V. Jungnickel et al. (in IEEE Transactions of Wireless Communications, Vol. 2, No. 5, Sept. 2003, pp. 989-999) bekannt. Hier wird die Möglichkeit des Umschaltens zwischen zwei Modi (direkt und diffus) beschrieben, wodurch die Kanalkapazität zwar besser ausgenutzt werden kann, ein komplexes elektronisches Tracking- und Pointing-System wird allerdings noch benötigt. Bei der Erzielung von Systemadaptivität ausschließlich durch Signalprozessierung ist es möglich, ohne komplexe Elektronik hohe Übertragungsgeschwindigkeiten mit einer effizienten Ausnutzung der Kanalkapazität zu erreichen.

Bislang wird bei bekannten Infrarot-Systemen eine Datenraten-Adaption im Zeitbereich prozessiert mit einer seriellen Basisbandübermittlung. Eine Veränderung der Übertragungsgeschwindigkeit wird durch adaptive Kodierung mittels variabler Codelänge oder -rate (vergleiche **Veröffentlichung V** "Rate-Adaptive Modulation Techniques for Infrared Wireless Communication" von L. Diana et al. (in Proc. of IEEE Intl. Conf. on Communications, Vancouver, B.C., Canada, pp. 597-603, June 1999) und der **Veröffentlichung VI** "Performance Evaluation of Rate-Adaptive Transmission Techniques for Optical Wireless Communication" von J.M. Garrido-Balsells et al. (in Proc. of Vehicular Technology Conference, pp. 914-918, 2004) oder durch Kombination von adaptiver Kodierung und leistungseffizienter Modulation (Grad der L-PPM) erreicht (vergleiche **Veröffentlichung VII** "Rate-Adaptive Indoor Infrared Wireless Communications systems Using Punctured Convolutional Codes and Adaptive PPM" von M. Matsuo et al., 1998. The Ninth IEEE International Symposium on Personal, Indoor and Mobile Radio Communications, Volume 2, 8-11 Sept. 1998, pp. 693 - 697 vol.2). Jedoch ist eine derartige breite Basisband-Übertragung aufgrund der Mehrfachwegausbreitung in einem Infrarot-System sehr anfällig gegenüber Inter-Symbol-Interferenz. Außerdem ist eine adaptive Angleichung in Form einer komplexen Signalprozessierung am Empfänger erforderlich. Weiterhin werden Systeme vorgeschlagen, welche sich mit einer Kombination der adaptiven seriellen Übertragung mit Winkeldiversität beschäftigen (vergleiche **Veröffentlichung VIII** "Angle diversity and rate adaptive transmission for indoor wireless optical communications" von A.Tavares et al., Communications Magazine, IEEE Volume 41, Issue 3, March 2003, pp. 64 - 73). Allerdings sind hierbei wiederum komplexe Optiken zur Erzeugung der Diversität und die adaptive Angleichung für die serielle Übertragung erforderlich. Anwendungen für Infrarot-Übertragungssysteme für eine datenratenadaptive Übertragung im Zeitbereich sind den oben genannten **Veröffentlichungen V** und **VI** zu entnehmen, von denen die vorliegende Erfindung als nächstliegendem Stand der Technik ausgeht. Dabei erfolgt die adaptive Anpassung der Datenrate jedoch ausschließlich im Zeitbereich durch Anpassung der Übertragungsgeschwindigkeit der seriellen Daten, deren blockweisen Bestimmung mit einer Veränderung der Blockgeschwindigkeit, der Variation der Codewortlänge oder der komplexen Kodierung zur Veränderung der Datenrate.

Bei drahtlosen Kommunikationssystemen auf Funkbasis ist die adaptive Signalprozessierung mit den Vorteilen einer Anpassung an die Ausbreitungsbedingungen und höherer Übertragungskapazitäten sowohl im Zeit- als auch im Frequenzbereich bekannt. Der erforderliche Rückkanal wird dabei auch ständig in Abhängigkeit von der aktuellen Kanalqualität neu festgelegt. Funksysteme sind zwar mit optischen Systemen nicht einfach durch Analogie vergleichbar, da die Kanäle grundsätzlich unterschiedliches Übertragungsverhalten aufzeigen (Funkkanal : Modulation durch Veränderung der Feldstärke (Signalamplitude), positive und negative Werte im Komplexen sind möglich, optischer Kanal : nur positive Werte im Reellen sind möglich, direkte Modulation nur durch eine Veränderung der Lichtintensität, d.h. der Amplitude der optischen Leistung. Die Unterscheidung der Adaptivität im Zeit- und im Frequenzbereich bezieht sich darauf, ob der Nutzer die Daten seriell auf einer Frequenz (Zeitansatz) oder parallel aufgespalten auf verschiedene Frequenzen (Frequenzansatz). Beim Funkkanal werden diese zwei Methoden mit Einzelträger- und Vielfachträger-Übertragungstechnik (single carrier, multiple carrier) bezeichnet. In einem optischen Infrarotsystem, das mit einer Wellenlänge arbeitet, existiert jedoch nur ein optischer Träger. Dieser optische Träger kann direkt mit seriellen Daten moduliert werden (Basisband-Übertragung, entsprechend zur Einzelträgertechnik im Funkkanal). Eine andere Methode ist es, den elektrischen Datenstrom zunächst aufzuteilen, um eine Vielzahl von elektrischen Trägern parallel zu modulieren. Mit diesem gesamten modulierten elektrischen Signal kann dann der optische Träger moduliert werden (Mehrfachträger-Modulation, entsprechend zur Mehrfachträger-Modulation im Funkkanal).

Eine ausführliche Beschreibung der adaptiven Signalprozessierung im Frequenzbereich für einen Funkkanal ist der **Veröffentlichung IX**: "Adaptive Multicarrier Modulation: A Convenient Framework for Time-frequency Processing in Wireless Communications" von Th. Keller et al. (in IEEE Proc. of the IEEE, Vol.88, No.5, May 2000, pp. 611- 640) zu entnehmen. Aus den genannten Druckschriften wird auch durch die angewendeten Algorithmen deutlich, dass eine einfache Analogie zwischen Funkkanal und optischem Kanal nicht möglich ist.

Die adaptive Signalprozessierung mit Mehrfachträger wird für den drahtgebundenen elektrischen Übertragungskanal mit DMT (Discrete Multi-Tone), für den drahtungebundenen Funkkanal mit AOFDM (Adaptive Orthogonal Frequency Division Multiplexing) und für den optischen Übertragungskanal mit MOSM-IR (Multiple Orthogonal Subcarrier Modulation) bezeichnet, wobei hier sende- und empfangsseitig je ein zusätzlicher Funktionsblock zur Intensitätsmdoulation bzw. direkten Detektion erforderlich ist. Bei den drahtungebundenen Systemen geht es grundsätzlich darum, Signalverzerrungen durch Mehrwegeausbreitung zu minimieren. Dabei handelt es sich um die gleichen Techniken (Mehrfachträger, adaptive Wahl des Modulationsformats für jeden Träger, Rückkanal für die Steuerinformationen), wobei DMT Übersprechen und AOFDM Mehrwegeausbreitung unterdrücken soll. In beiden Techniken werden Mehrfachträger verwendet, um unterschiedliche physikalische Probleme zu beheben, die in den physikalisch unterschiedlichen Übertragungskanälen auftreten.

**Aufgabenstellung**

Die Aufgabe für die vorliegende Erfindung ist daher darin zu sehen, das zuvor erläuterte gattungsgemäße Signalverarbeitungsverfahren so weiterzubilden, dass eine adaptive Signalprozessierung in einem drahtlosen Infrarot-Datenübertragungssystem, bei dem die Eigenschaften des optischen Übertragungskanals bekanntlich in einem großen Frequenzbereich schwanken, auch im Frequenzbereich durchgeführt werden kann, um auch bei optischen Übertragungskanälen die bei den Funkkänalen durch Adaption im Frequenzbereich vorhandenen Vorteile erreichen zu können. Die erfindungsgemäße Lösung für diese Aufgabe ist dem Hauptanspruch zu entnehmen. Vorteilhafte Weiterbildungen werden in den Unteransprüchen aufgezeigt und im Folgenden im Zusammenhang mit der Erfindung näher erläutert.

Dabei ist bei dem gattungsgemäßen dynamischen datenratenadaptiven Signalverarbeitungsverfahren für die Übertragung von Datensignalen mit einer vorgegebenen Signalleistung in einem drahtlosen Infrarot-Datenübertragungssystem mit einem ungerichteten, bidirektional betreibbaren optischen Übertragungskanal aus Infrarotlicht einer vorgegebenen Frequenz zwischen einem stationären Sender und einem mobilen Empfänger im Innenraumbereich, vorgesehen, dass

- das elektrische Datensignal in eine Anzahl N paralleler Datensignalströme aufgeteilt und einer Vielzahl von orthogonalen elektrischen Subträgern unterschiedlicher Subträgerfrequenzen zugeordnet wird,
- die aktuell zu übertragende Datenrate der Datensignalströme für jeden elektrischen Subträger durch individuelle Auswahl eines Modulationsformats und der Datenübertragungsgeschwindigkeit quasikontinuierlich in Abhängigkeit von der jeweiligen Übertragungsqualität des Subträgers bestimmt wird, wobei die optische Signalleistung auf die einzelnen Subträger unter Einhaltung von sicherheitstechnischen Vorschriften verteilt wird,
- entsprechend der gewählten Modulationsformate nach Parallel-Serien-Wandlung die Intensität des zu sendenden Infrarotlichts direkt moduliert wird,
- am Empfänger das seriell übertragene optische Signal direkt im Basisband detektiert wird,
  die Anzahl N paralleler elektrischer Datensignalströme demoduliert wird,
- jeder elektrische Datensignalstrom separat prozessiert wird und dass
- der Subträger mit der niedrigsten Subträgerfrequenz dauerhaft als Rückkanal vom Empfänger zum Sender zur Übermittlung von Steuerinformationen bezüglich der aktuellen Übertragungsqualität jedes Subträgers für die adaptive Bestimmung der aktuell zu übertragenden Datenrate in jedem Subträger genutzt wird.

Das erfindungsgemäße datenratenadaptive Signalverarbeitungsverfahren mit einer dynamischen Ermittlung der aktuellen Übertragungsrate pro Subträger ermöglicht erstmals eine Datenprozessierung im Frequenzbereich zur Übertragungsoptimierung in einem einfachen optischen Übertragungssystem ohne aufwändige optische oder elektronische Komponenten. Die Verbesserung der Übertragung, die im Übertragungskanal bidirektional möglich ist, wird ausschließlich durch eine Signalprozessierung erreicht. Es werden orthogonale elektrische Subträger im Frequenzbereich gemultiplext. Die Modulation und entsprechend die Demodulation der Datensignale erfolgt zweistufig. Beim Sender wird zunächst eine elektrisch und anschließend eine optische Modulation durchgeführt. Auf der Empfängerseite erfolgt die Demodulation in umgekehrter Reihenfolge. Weiterhin kann eine zusätzliche adaptive Kodierung der Subträger erfolgen, wenn eine unkodierte Übertragung betrachtet wird. Die durch den Kanal zur Verfügung gestellte Übertragungskapazität wird effizient ausgenutzt: Unter guten Übertragungsbedingungen können sehr hohe Datenraten übertragen werden, unter schlechteren Übertragungsbedingungen hingegen werden die Datenraten gesenkt. Es ergibt sich ein Nutzen-Kostenoptimierter optischer Übertragungskanal mit hoher Servicequalität (QoS). Bei dem erfindungsgemäßen Verfahren wird der Rückkanal dauerhaft auf den elektrische Subträger mit der niedrigsten Subträgerfrequenz, die eine Übertragung gewährleistet, gelegt, Durch diese Belegung kann zuverlässig eine dauerhafte Rückmeldung im System gewährleistet werden, die sich auch einfach überprüfen lässt. Wird der Rückkanal nämlich bewusst unterbrochen, ist der Ausfall der Adaption durch eine abrupte Verschlechterung der Signalübertragung und damit die Effektivität des Adaptionssystems sofort erkennbar. Ein Analysierer im Rückkanal kann erfassen, wie sich die Steuerinformationen ändern, wenn sich der Übertragungskanal ändert.

Bei dem erfindungsgemäßen Verfahren galt es das Problem zu lösen, die Mehrwegausbreitung in einer drahtlosen Verbindung mit einem Infrarotkanal (mit positiven Realwerten der Lichtintensität) zu lösen, wodurch sich die Bedingungen für das zu übertragende optische Signal verschärfen gegenüber bekannten Übertragungsverfahren. Durch die Aufteilung in N parallele Subträger kann die Übertragungsgeschwindigkeit pro Subträger reduziert werden, was gleichbedeutend mit einer geringeren Bandbreite ist. Dadurch kann der Einfluss der Inter-Symbol-Interferenz verringert werden, was sich wiederum positiv auf den Empfänger auswirkt, an dem nur eine einfache Signalprozessierung durchgeführt werden muss. Weitere Einzelheiten zum erfindungsgemäßen Verfahren sind dem speziellen Beschreibungsteil zu entnehmen. Dort sind auch Erläuterungen zu Ausführungsformen des Signalbearbeitungsverfahrens zu finden, die sich mit der konkreten Auswahl der Modulationsformate für jeden Subträger nach einem Bit-Loading-Algorithmus unter realen Betriebsbedingungen (momentanes Kanalrauschen, maximal zulässige optische Signalleistung, zulässige BER) befassen.

**Ausführungsbeispiele**

Die Funktionsweise des erfindungsgemäßen datenratenadaptiven Signalverarbeitungsverfahrens wird nachfolgend anhand der schematischen Figuren näher erläutert. Dabei zeigt:

**Figur 1**      eine Darstellung eines kleinen Büros mit einem InfrarotDatenübertragungssystem,

**Figur 2**      ein Diagramm der frequenzabhängigen Infrarotkanalantwort bei unterschiedlichen K-Faktoren,

**Figur 3**      ein Diagramm der K-Faktor-Verteilung für verschiedene Reichweiten und Empfängerorientierungen ,

**Figur 4**      ein Blockschaltbild des Verfahrens,

**Figur 5**      ein Diagramm für die optimale Leistungsverteilung für unterschiedliche Kanalzustände,

**Figur 6**      ein Diagramm der gesamten maximal möglichen Datenrate in Abhängigkeit vom K-Faktor,

**Figur 7**      ein BER-Diagramm für unterschiedliche Modulationsformate,

**Figur 8**      ein Diagramm der Kanalkapazität in Abhängigkeit vom Kanalzustand,

**Figur 9A**      ein OPC-Diagramm für einen IR-Kanal,

**Figur 9B**      ein OPC-Diagramm für einen DSL-Kanal,

**Figur 10**      ein Beispiel für verschiedene Bit-Verteilungen zum Zwei-Stufen-Bit-Loading-Algorithmus und

**Figur 11**      ein Flussdiagramm für einen optimalen Bit-Loading-Algorithmus.

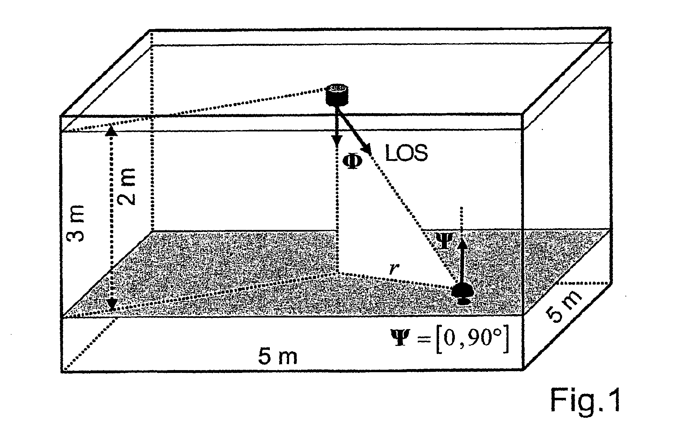

Eine typische Anwendung eines drahtlosen Infrarotübertragungssystems ist in **Figur 1** in Form eines kleinen Büros dargestellt. Der Sender Tx ist in der Deckenmitte angeordnet, der Empfänger Rx kann beliebig, beispielsweise auf einem Schreibtisch, angeordnet sein und hat eine beliebige Ausrichtung unter Einhaltung der Sichtverbindung LOS zum Sender Tx. Eine derartige Anordnung mit einem ungerichteten Übertragungskanal ermöglicht vorteilhaft sowohl eine diffuse als auch eine direkte Kommunikationsverbindung zwischen Sender Tx und Empfänger Rx. Wenn eine direkte Verbindung zwischen ihnen besteht, kann die Sichtverbindung zur Kommunikation verwendet werden. Wenn die direkte Verbindung unterbrochen ist, kann die diffuse Verbindung die Kommunikation bei einer verminderten Datenrate aufrechterhalten.

Die Übertragungsfunktion des Infrarotkanals in einer derartigen ungerichteten Sichtverbindung ergibt sich zu:

$$H(f) = \eta_{\text{LOS}} + H_{\text{diff}}(f) \qquad\qquad (1)$$

mit $\eta_{\text{LOS}}$ = Anteil der Sichtverbindung bezüglich Wegamplitudendämpfung, welche grundsätzlich unabhängig von der Modulationsfrequenz $f$ ist, und $H_{\text{diff}}(f)$ = Anteil der diffusen Reflexion im Raum, welcher durch eine Tiefpassfunktion erster Ordnung abgeschätzt werden kann. Es kann erkannt werden, dass die Kanalantwort im Frequenzbereich eine große Dynamik aufweist, die von dem Leistungsverhältnis zwischen der Sichtverbindung und dem diffusen Signal abhängt. Diese Abhängigkeit kann durch den K-Faktor in dB mit $K = {}_{20}.\log(\eta_{\text{LOS}}/\eta_{\text{diff}})$ quantifiziert werden, wobei $\eta_{\text{diff}}$ die Verteilung der diffusen Verbindung bezüglich Wegamplitudendämpfung st.

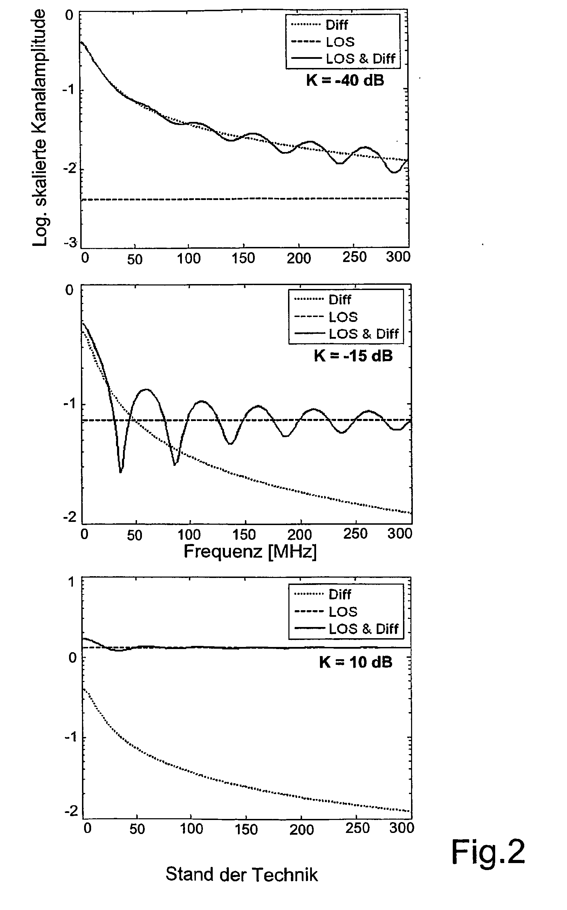

In der **Figur 2** ist eine Kanaldynamik mit den Parametern Frequenz und K-Faktor für den Büroraum gemäß **Figur 1** dargestellt. Das Diagramm zeigt den Verlauf der logarithmisch skalierten und genormten Kanalamplitude über der Übertragungsfrequenz für verschiedene K-Faktoren. Wenn die Sichtverbindung blockiert ist oder sehr schlecht, entspricht die Kanalantwort angenähert einem Tiefpass und die Kanalbandbreite ist gering. Wenn die Sichtverbindung besser wird, variiert die Kanalantwort stark und zeigt Einschnitte, bis sie für ausreichende K-Faktoren glatt verläuft und eine Bandbreite aufweist, die um eine Größenordnung größer ist als im diffusen Fall.

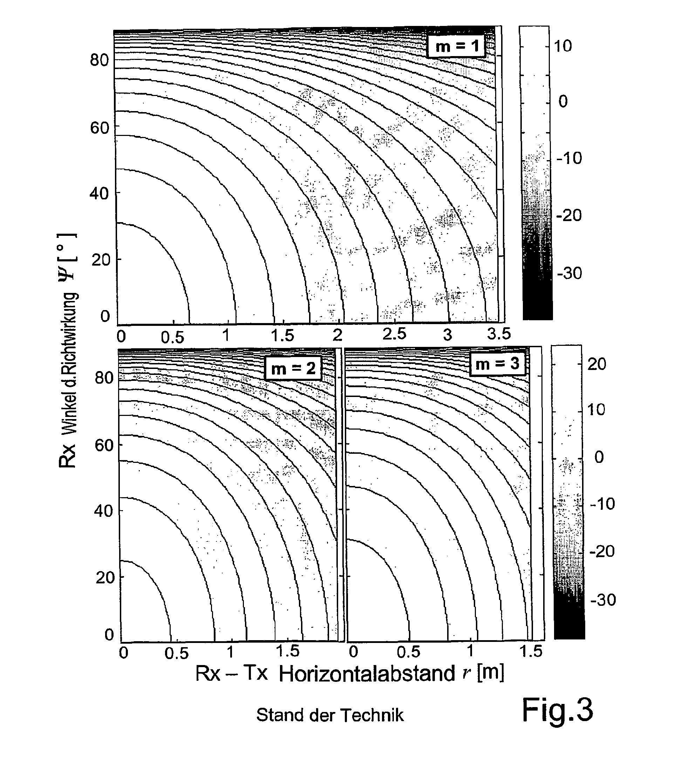

Das Szenario gemäß **Figur 1** ist so ausgewählt, dass die Werte der K-Faktoren für reale Umgebungsbedingungen erhalten werden. Die Verteilung der K-Faktoren im Raum ist in der **Figur 3** für drei verschiedene Werte des Lambert-Strahlungsindex m beim Sender Tx dargestellt, die die Strahlbreite $\Phi_{max} = \arccos \sqrt[m]{1/2}$ bestimmen und das Gebiet der Sichtverbindung begrenzen, wenn diese nicht blockiert ist. Die **Figur 3** zeigt den Verlauf der K-Faktor-Werte in Abhängigkeit von der horizontalen Entfernung r zwischen Sender Tx und Empfänger Rx und am Empfängerwinkel der Richtwirkung $\Psi$. Es ist zu erkennen, dass der K-Faktor-Bereich größer ist mit einer besseren Ausrichtung des Sender Tx (größere m), dennoch verkleinert sich der Bereich für eine mögliche Sichtverbindung, sodass mehrere Sender erforderlich wären, um den ganzen Raum sicher abzudecken. Der **Figur 3** ist aber auch zu entnehmen, dass für m=1 für einen Übertragungskanal mit moderater Richtwirkung eine schlechte Übertragung nur in den Raumecken gegeben ist. Trotzdem können mit dem erfindungsgemäßen Verfahren höhere Datenraten als für einen diffusen Kanal erreicht werden. Das Anwachsen des K-Faktors erfolgt unmittelbarer für einen stärker gerichteten Sender Tx. Gleichzeitig ist der Richtwinkel zum Empfänger Rx kritischer als seine Entfernung zum Sender Tx.

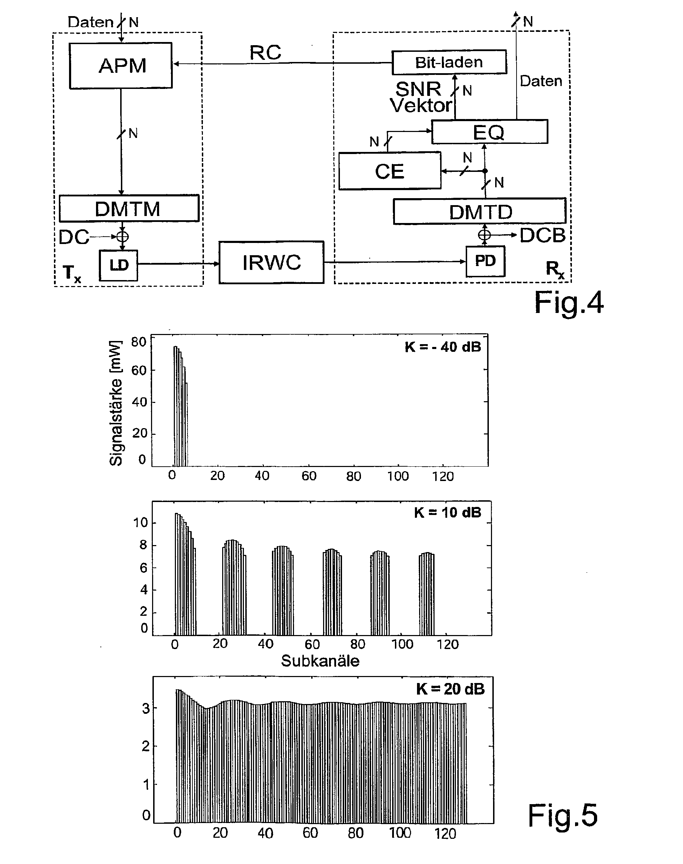

Das grundsätzliche Blockschema zum erfindungsgemäßen Signalprozessierungsverfahren ist der **Figur 4** zu entnehmen. Gemäß **Figur 1** wird eine Kommunikation zwischen einem an der Raumdecke fixierten Sender **Tx** und einem mobilen Empfänger **Rx** angenommen. Das elektrische Datensignal **data** wird am Sender **Tx** in **N** parallele Ströme aufgeteilt, die anschließend auf eine entsprechende Anzahl **N** von Subträgern in geeigneter Weise aufmoduliert werden. Das für jeden Subträger optimale Modulationsformat wird in Übereinstimmung mit Steuerinformationen, die in Form eines Vektors der Modulationscodes pro Subträger über einen Rückkanal **RC** mit niedriger Geschwindigkeit im Uplink vom mobilen Empfänger **Rx** zum stationären Sender **Tx** gesendet werden, ausgesucht. Verschiedene Modulationsverfahren für optische Signalübertragung, beispielsweise BPSK, QPSK, OOK, LPPM, sind aus dem Stand der Technik bekannt. Nach der adaptiven Erstmodulation **APM** werden die zu übertragenden Datensymbole durch digitale Signalprozessierung **DMTM** erzeugt. DMT-Modulation ist aus dem Stand der Technik für leitungsgebundene elektrische Übertragungskanäle gut bekannt. Beim optischen Übertragungskanal wird DMT zur direkten Modulation einer Lichtquelle **LD** genutzt. Vorher wird den prozessierten Signalen in einem weiteren funktionellen Block eine Gleichkomponente **DC** hinzugefügt, um die Lichtquelle **LD** korrekt anzusteuern.

Die modulierten optischen Signale erreichen dann den mobilen Empfänger **Rx,** nachdem sie vom optischen Übertragungskanal **IRWC** und dem natürlichen Umgebungslicht, das Rauschen hervorruft, beeinflusst worden sind. Am Empfänger **Rx** erfolgt zunächst eine direkte Signaldetektion mittels einer Photodiode **PD,** anschließend wird die Gleichkomponente **DC** eliminiert, **DCB,** und eine DMT-Demodulation, **DMTD,** durchgeführt. Weiterhin werden alle **N** Subträger einzeln prozessiert. Ein Teil der Signalleistung in jedem Subträger wird abgezogen für die Kanalabschätzung **CE.** Anschließend werden die Daten ausgeglichen, **EQ,** was durch eine Multiplikation mit den inversen Kanalkoeffizienten erfolgen kann. Unterschiedliche Wege zur Kanalschätzung und zum Signalabgleich sind allgemein aus dem Stand der Technik hinreichend bekannt. Weiterhin wird vom Empfänger **Rx** der aktuelle Vektor für die besten Modulationsformate pro Subträger in Abhängigkeit vom momentanen Kanalstatus erzeugt und über den Rückkanal **RC** zum Sender **Tx** geschickt. Der Vektor kann dabei folgendermaßen erzeugt werden : der Datenausgleich **EQ** erbringt einen Vektor für die Signal-zu-Rausch-Rate SNR oder Rauschverstärkung, auf dessen Betrag ein geeignetes Bit-Loading-Schema implementiert wird, um die Bitzahl und die Verteilung der Signalleistung auf jeden Subträger unter Bezugnahme auf die Konstellationsbedingungen, die das Modulationsformat und die Alphabetgröße festlegen, zu bestimmen. Verschiedene Bit-Loading-Verfahren sind ebenfalls aus dem Stand der Technik bekannt. Dabei wird für einen guten Subträger, der eine gute Kanaldämpfung und eine relativ geringe Rauscherhöhung aufweist, ein Modulationsschema mit einer größeren Bandbreiteneffizienz genutzt, sodass eine große Informationsmenge übertragen werden kann. Ein schlechter Subträger hingegen wird nur wenig oder gar keine Informationen übertragen. Eine Übertragung mit einer vorbestimmten Bitfehlerrate kann aber trotz der Kanalschwächung realisiert werden. Der Rückkanal **RC** kann den niedrigsten Subträger, der immer noch für eine Übertragung geeignet ist, belegen, um die erforderliche Rückkopplung zur Umsetzung des adaptiven Systems zu realisieren.

Die Kapazitätsanalyse der Subträger zur optimalen Leistungsverteilung erfolgt folgendermaßen. Aus dem Umstand, dass bei einem Infrarotsystem Intensitätsmodulation und direkte Detektion angewendet werden, folgt direkt, dass die elektrische Signal-zu-Rausch-Rate SNR proportional zum Quadrat des Mittelwertes der empfangenen optischen Leistung ist. Die elektrische Signal-zu-Rausch-Rate SNR ist definiert als das Verhältnis aus der elektrischen Signalleistung $P_{cl,R}$ und der elektrischen Rauschleistung $N_{cl}$ am Empfänger Rx, woraus sich ergibt:

$$SNR = P_{cl,R}/N_{cl} = I_{ph}^2/\sigma^2 = R^2 \cdot P_{opt,R}^2/\sigma^2 = R^2 \cdot |H|^2 \cdot P_{opt,T}^2/\sigma^2 \ , \qquad (2)$$

wobei $I_{ph}$ der erzeugte Photostrom, $\sigma^2$ die Rauschvarianz, $R$ die Empfängeransprechempfindlichkeit und $|H|$ die Amplitude der Kanalfrequenzantwort ist, während die optische Leistung am Empfänger Rx und am Sender Tx bezeichnen. Dabei wird angenommen, dass die elektrische Rauschleistung von Hintergrundbeleuchtungsrauschen als dem bedeutendsten Beiträger im Infrarotsystem (bei 900 nm) herrührt.

Ein Infrarotsystem mit N orthogonalen Subträgern kann als System aus N parallelen unabhängigen Gaußschen Kanälen mit unabhängigem Rauschen angesehen werden. Die gesamte Systemkapazität (bits/Übertragung), nach den Formeln der Shannonschen Informationstheorie, ergibt sich aus der Summe der Kapazitäten von allen Subträgern, woraus nach Einsetzen von Gleichung (2) folgt:

$$C = \frac{1}{2}\sum_{i=1}^{N}\log_2\left(1 + SNR_i\right) = \frac{1}{2}\sum_{i=1}^{N}\log_2\left(1 + P_{\text{opt},T,i}^2 / \alpha_i\right), \qquad (3)$$

wobei $P_{\text{opt},T,i}$, $|H_i|$ and $\alpha_i = \alpha^2 \cdot R^{-2} \cdot |H_i|^{-2}$ die optische Leistung, die Amplitude der Kanalantwort und das effektive Rauschen des i-ten Subträgers darstellen. Dabei ist es wichtig zu erkennen, dass der Term der optischen Leistung gemäß Gleichung (3) im Quadrat steht. Dadurch ergibt sich ein gravierender Unterschied in der Kapazitätsfunktion zwischen dem optischen Kanal und dem Funkkanal, bei dem der entsprechende Term unquadriert ist. Daraus ergibt sich das Erfordernis eines speziellen Leistungsverteilungsschemas, das im Folgenden beschrieben wird.

Infrarotübertragungssysteme sind von Sicherheitsbestimmungen (Augen- und Hautschutz) abhängig, welche eine obere Grenze für die vom Sender Tx zu übertragende mittlere Gesamtleistung $P_{\text{TOT}}$ festlegen. Diese Gesamtleistung $P_{\text{TOT}}$ ist nun so auf die unabhängigen Subträger zu verteilen, dass eine maximale Systemkapazität erreicht wird. Hierbei handelt es sich um ein aus dem Stand der Technik bekanntes Optimierungsproblem, das mit Hilfe von Lagrange-Faktoren gelöst werden kann.

Bei der mathematischen Berechnung soll ein Vektor $\mathbf{P} = (P_1, P_2, ..., P_N)$ so bestimmt werden, dass die N-variable Funktion $C(\mathbf{P})$ gemäß Gleichung (3) maximiert wird unter der Bedingung $g(\mathbf{P}) = \sum_{i=1}^{N} P_i - P_{\text{TOT}} = 0$. Zunächst wird die Lagrange-Funktion gebildet zu $L(\mathbf{P}) = C(\mathbf{P}) - \lambda \cdot g(\mathbf{P})$, wobei für den Lagrange-Faktor gilt $\lambda = \text{const.} \in \mathbf{R}$. Die optimierte Lösung kann dann aus einem System von N Gleichungen $\partial L(P_i)/\partial P_i = 0$, $i = 1...N$ erhalten werden, welche nach einigen Umformungen resultieren zu:

$$P_i = \begin{cases} (\lambda \cdot \ln 4)^{-1} + \sqrt{(\lambda \cdot \ln 4)^{-2} - \alpha_i} & \text{if} \quad \lambda \le \left(\ln 4 \cdot \sqrt{\alpha_i}\right)^{-1}, \\ 0 & \text{otherwise.} \end{cases} \qquad (4)$$

mit "otherwise" in der Bedeutung für alle anderen Fälle außerhalb des in der ersten Zeile genannten Falles.

Die optimale Leistungsverteilung für drei verschiedene Kanalzustände (unterschiedliche K-Faktoren) ist in der **Figur 5** aufgezeigt. In einer Simulation wurden 128 Subträger über eine Bandbreite von 300 MHz verteilt, der Si-APD (bei einem Faktor M=100 und einem hoch angenommenen Rauschfaktor x = 0,35) wird mit einer effektiven Gesamtoberfläche $A_R$= 30 mm² angenommen. Die optische Leistungsbedingung ist in Übereinstimmung mit den Sicherheitsbestimmungen für erweiterte diffuse Lichtquellen bei 900 nm festgelegt bei $P_{\text{TOT}} = P_{\text{Tx}} = 400$ mW. Für einen nahezu diffusen (mit einem niedrigen K-Faktor) oder diffusen Übertragungskanal ist zu erkennen, dass die Signalleistung nur auf die wenigen ersten Subträger verteilt ist. Verbessert sich das Kanalverhalten zu größere Bandbreite, werden nach und nach mehr Subträger mit einer geringeren Leistung aufgefüllt und für die Übertragung genutzt. Für K-Faktoren bei einer breiten Kanalantwort ergibt sich eine gleichmäßige Leistungsverteilung auf alle Subträger.

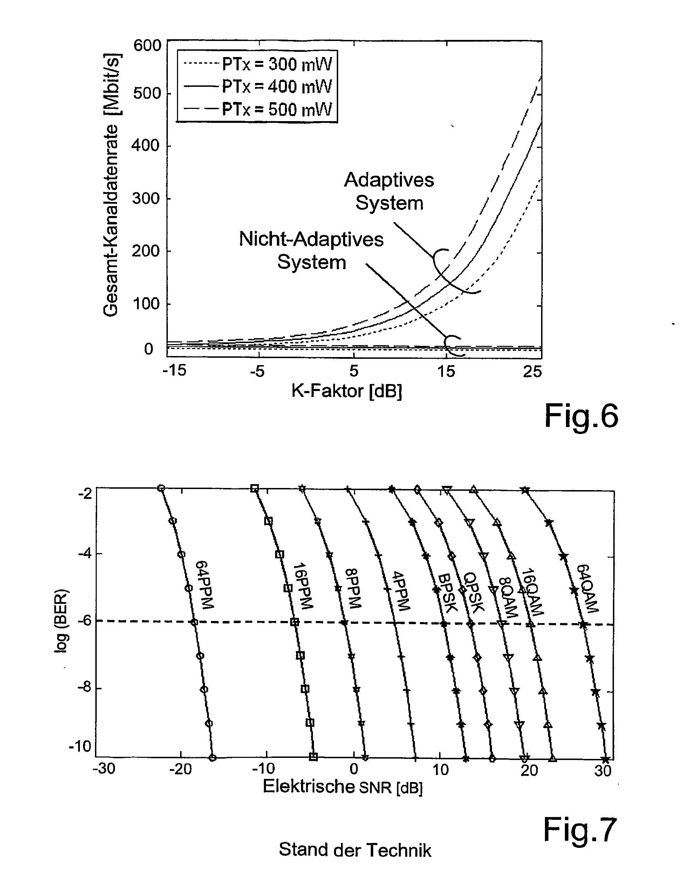

Die potenziellen Datenraten eines infraroten Übertragungssystems mit der zuvor beschriebenen adaptiven Signalprozessierung für drei verschiedene Werte der Sendeleistung $P_{\text{Tx}}$ sind in der **Figur 6** dargestellt. Als Vergleich sind Graphen für ein statisches Subträgersystem gezeigt, bei denen eine Übertragung im gesamten Raum mit einem diffusen Übertragungskanal sicher gewährleistet ist. Die Vorteile der adaptiven Signalprozessierung sind deutlich erkennbar, wenn die K-Faktoren den 0 dB-Bereich erreichen und in einer Weise anwachsen, dass für moderate Werte des K-Faktors ein großer Zuwachs in der Datenrate erreicht werden kann. Nach einem Erreichen der K-Faktoren von 15 dB steigen die Vorteile noch stärker an. Für größere Leistungen des Sender Tx ist der Unterschied zwischen der adaptiven und der nicht-adaptiven Signalprozessierung besonders auffällig. Festzustellen ist, dass bei einer Skalierung gemäß **Figur 3** auch bei den Resultaten gemäß **Figur 6** eine optimale Verteilung der potenziellen Datenraten in einem Raum gemäß **Figur 1** erhalten werden kann.

Eine derartige Optimierung ist bekannt für die Kapazitätsmaximierung in drahtlosen Funkkanälen und wird als "Water-Filling-Prinzip" bezeichnet. Dabei wird die Kapazität maximiert gemäß

$$C(\mathbf{P}) = \frac{1}{2}\sum_{i=1}^{N}\log_2\left(1 + \frac{P_{\text{el},T,i}}{\sigma^2 / |H_i|^2}\right) = \frac{1}{2}\sum_{i=1}^{N}\log_2\left(1 + \frac{P_{\text{el},T,i}}{\beta_i}\right) \qquad (5)$$

unter der elektrischen Leistungsbedingung $g\left(\mathbf{P}\right) = \sum_{i=1}^{N} P_{i,\mathrm{el}} - P_{\mathrm{TOT,el}} = 0$ , welche sich grundlegend von der zu maximierenden Kapazitätsfunktion im Infrarotkanal unterscheidet und linear von der Leistung abhängt. Da die Kapazität eines Infrarotkanals genauso wie bei einem Funkkanal als Funktion der elektrischen Signalleistung am Sender Tx ausgedrückt werden kann, liegt es nahe zu versuchen, eine optimale Leistungsverteilung entsprechend dem Water-Filling-Prinzip zu erreichen. Gezeigt werden konnte aber, dass die optimale Leistungsverteilung ein anderes Aussehen hat und das Water-Filling-Prinzip bei der Infrarotübertragung, die in der optischen leistung durch die Sicherheitsbestimmungen begrenzt ist, nur zu suboptimalen Leistungsverteilungen führt. Bei einer beispielsweise durch die verwendete Hardware bedingten Sendeleistung unterhalb der Sicherheitsbedingungen führt das Water-Filling-Prinzip auch bei Infrarot-Systemen zwar zu einer maximalen Kapazitätsauslastung des Systems, jedoch nicht zu einer maximalen Datenrate. Die optischen Bedingungen in einem Infrarot-System sind daher genau zu berücksichtigen. Dann kann eine Optimierung der Systemparameter im Hinblick auf die Anzahl der Subträger, der Wahl der geeigneten Bit-Loading-Systeme und Modulationsformate, das ausreichende Niveau der Modulation, Grad der Adaption usw. zu Erreichung der theoretisch maximalen Kapazität in einem Infrarot-Übertragungssystem durchgeführt werden.

Mit dem Verfahren nach der Erfindung kann die Übertragungskapazität eines drahtlosen Infrarot-Datenübertragungssystems durch eine geschickte Verteilung der gesamten optischen Übertragungsleistung auf die Subträger maximiert werden. Dabei erfolgt die Leistungsverteilung jedoch kontinuierlich und unter der Annahme infinitesimal kleiner Informationsquanten und ohne Berücksichtigung von Modulationsformaten. Weiterhin wird eine fehlerfreie Übertragung im Übertragungskanal angenommen. In der Praxis werden die Informationen jedoch in Bits ausgedrückt. Außerdem unterliegt der Übertragungskanal Störeinflüssen. Aufgrund der Kanaldynamik ist jeder Subträger beim Empfänger einem bestimmten äquivalenten Kanalrauschen unterworfen, das die übertragenen Signale verzerrt und zu Fehlentscheidungen im Demodulationsprozess führen kann. Zur Berücksichtigung der realen Störeinflüsse bei Übertragungssystemen wird deshalb in der Praxis eine garantierte Übertragungsqualität (QoS Quality of Service) definiert, z.B. durch die Festlegung einer maximal tolerierbaren Fehlerrate am Empfänger (BER Bit Error Rate).

Die im theoretischen Idealfall mit dem erfindungsgemäßen dynamischen datenratenadaptiven Signalverarbeitungsverfahren nach der Erfindung erreichbare maximale Übertragungskapazität ist daher in der Praxis nur mit einem Abschlag in Abhängigkeit von den realen Implementierungsverhältnissen erreichbar. In der praktischen Ausführung kann die zu Verfügung stehende optische Sendeleistung nur stufenweise verteilt werden. Bei einem Ansteigen des Kanalrauschens kann zur Gewährleistung der QoS entweder die Symbolleistung erhöht oder die Symbolkomplexität verringert werden. Da aber ein Infrarotsystem zu Schutzzwecken einer Beschränkung der optischen Sendeleistung unterliegt, kann die Symbolleistung nicht beliebig erhöht werden. Deshalb kann auch für den realen Fall unter Annahme von Störeinflüssen für jeden einzelnen Subträger in Abhängigkeit von dem aktuell auftretenden Rauschen das Modulationsformat und damit die Datenrate angepasst werden. Die Wahl des Modulationsformates bestimmt die Komplexität der Symbolkonstellation. Dabei erfordert jede Symbolkonstellation einen bestimmten elektrischen Signal-zu-Rausch-Abstand (SNR) am Empfänger, um mit einer vorgegebenen BER übertragen werden zu können. In der Figur 7 sind verschiedene BER-Kurven über der SNR mit dem Modulationsformat in unterschiedlicher Ordnung als Parameter aufgetragen. Diese können aus der Standardliteratur hergeleitet werden. In einem DMT-basierten System wird ein M-PPM-Symbol über M-DMT-Symbole auf demselben Subträger übertragen und legt die minimale Blocklänge fest. In einem adaptiven Übertragungssystem tragen die Subträger mit einem guten Kanalkoeffizienten mehr Information (es wird ein Modulationsformat mit einer höheren Komplexität gewählt) als die Subträger mit einem schlechteren Kanalkoeffizienten (es wird ein Modulationsformat mit einer geringeren Komplexität gewählt).

Um die Datenrate im Übertragungskanal auch unter realen Verhältnissen mit dem erfindungsgemäßen Signalverarbeitungsverfahren maximieren zu können, können deshalb spezielle Bit-Loading-Algorithmen verwendet werden, die Symbolkonstellationen aus einem vorgegebenen Set auswählen und zu einer Datenratenmaximierung unter Berücksichtigung von Leistungsbeschränkungen und Störeinflüssen führen. Dabei berücksichtigen sie jedoch nicht die theoretische optimale Leistungsverteilung. Auf Grund der diskreten Informationszuordnung führen Bit-Loading-Algorithmen nicht zu einer vollständigen Nutzung der zur Verfügung stehenden Gesamtleistung , sodass ein kleiner Rest ungenutzt bleibt. Für drahtgebundene DSL-Systeme ist der Bit-Loading-Algorithmus nach Krongold bekannt (vergleiche Veröffentlichung von B. S. Krongold, K. Ramchandran, D. L. Jones,"Computationally Efficient Optimal Power allocation Algorithms for Multicarrier Communication Systems" IEEE Trans. on Communications, Vol. 48, No.1 (2000) pp1018-1022). Der Krongold-Algorithmus nutzt die Lagrange-Multiplikationsmethode zur Maximierung der schrittweisen diskreten Funktion des gesamten Systemdurchsatzes. Dabei hängen die elektrische SNR und die elektrische Leistung bei einem drahtgebundenen System aber linear voneinander ab. Dieser für drahtgebundene DSL-Systeme optimale Bit-Loading-Algorithmus kann auf das erfindungsgemäße Signalverarbeitungsverfahren in einem drahtlosen Infrarot-Datenübertragungssystem übertragen werden. Dabei muss jedoch berücksichtigt werden, dass dort die elektrische SNR und die optische Leistung quadratisch voneinander abhängen und die bei geringeren Kanalleistungen besonders die effiziente PPM-Technik (vergleiche **Figur 7**) benötigt wird.

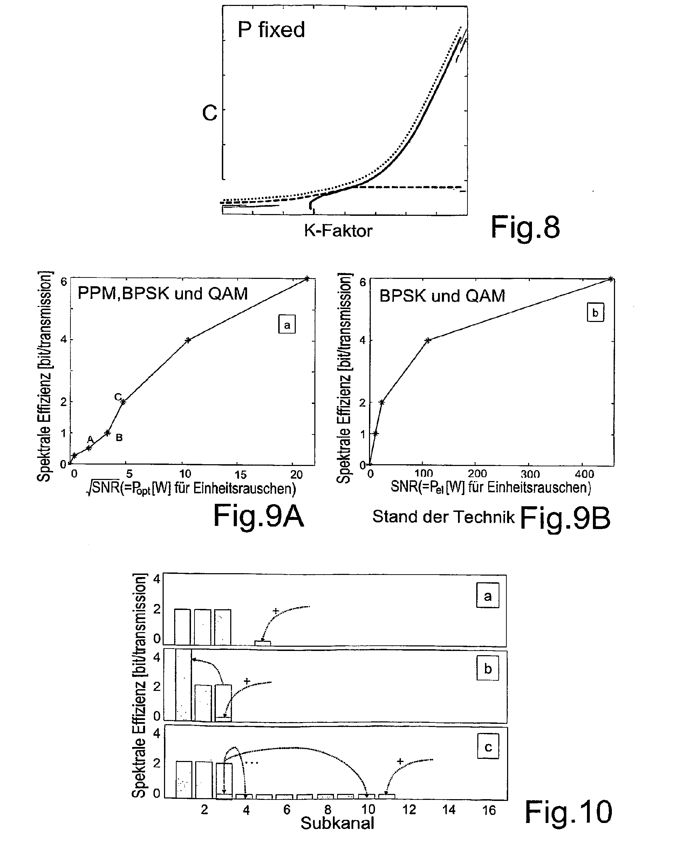

Die **Figur 8** zeigt ein Diagramm der Kanalkapazität C als gesamte theoretisch erreichbare Datenrate in Abhängigkeit vom realen Kanalzustand für einen Innenraum-Infrarotsystem. Der reale Kanalzustand wird auch durch den K-Faktor beschrieben, der sich aus dem Verhältnis zwischen der LOS- und der diffusen Komponente für eine vorgegebene geometrische Anordnung von Sender und Empfänger im Raum ergibt. Die Kurve C sollte durch die Wahl der Modulationsformate möglichst gut nachvollzogen werden. Da jedoch im Realfall die Leistungsverteilung aufgrund der Informationsquantelung diskret auf die Subträger erfolgt, kann kein Modulationsformat gefunden werden, das diese Bedingung erfüllt. Vielmehr folgt im Bereich schlechter Kanäle (Kanalzustände) mit einem geringen K-Faktor das PPM-Modulationsformat der Kapazitätskurve C, bleibt dann aber ab einer relativ geringen Übertragungskapazität C konstant (Kurve PPM). Für gute Kanäle ist das QAM-Modulationsformat sehr geeignet, es überschneidet sich mit dem PPM-Modulationsformat und wird für schlechtere Kanäle zu Null (Kurve QAM). Die Anwendung des komplexeren Modulationsformats auf schlechte Kanäle führt zu einer Übertragungsunterbrechung, das Anwenden von weniger komplexen Modulationsformaten auf guten Kanäle führt zu einer Unterforderung des Kanals, es werden geringere Datenraten übertragen als möglich sind. Nahe liegend ist bei dieser Betrachtungsweise also eine gleichzeitige Verwendung mehrerer geeigneter Modulationsformate.

| $i$ | 1 | 2 | 3 | 4 | 5 | 6 |
|---|---|---|---|---|---|---|
| $MF_i$ | 16PPM | 4PPM | BPSK | QPSK | 16QAM | 64QAM |
| $R_i$ [bits/symbol] | 1/4 | 1/2 | 1 | 2 | 4 | 6 |
| SNR [dB] @ BER $=10^{-6}$ | -6.82 | 4.76 | 10.53 | 13.54 | 20.42 | 26.56 |

Die vorstehende **Tabelle 1** zeigt die spektrale Effizienz, $R_i$ (auf dem i-ten Subträger übertragene Anzahl von Bits pro DMT Symbol) und die erforderliche SNR in dB für verschiedene Modulationsformate MF bei einer angenommenen BER von $10^{-6}$. Zu erkennen ist, dass für schlechtere Kanäle das PPM-Modulationsformat und für bessere Kanäle das QAM-Modulationsformat (mit QPSK = 4 QAM) besonders geeignet ist. (Anmerkung : das BPSK-Modulationsformat ist in seiner Natur dem QAM-Modulationsformat verwandt und kann daher zu diesem gezählt werden.) Mit dem QAM-Modulationsformat kann je nach gewählter Ordnung ab zwei Bits jede Bitanzahl pro Symbol übertragen werden. Mit dem PPM-Modulationsformat, das sich völlig von dem QAM-Modulationsformat unterscheidet, können Bruchteile eines Bits pro DMT-Symbol übertragen werden. Deshalb kann der Fall auftreten, dass ein M-PPM-Symbol über mehrere M-DMT-Symbolperioden übertragen wird.

In der **Figur 9A** sind die Werte gemäß der **Tabelle 1** über der erforderlichen optischen Leistung unter der Annahme von einheitlichem Rauschen (unitiy noise = 1). Die sich aus der Verbindung der einzelnen Punkte ergebende Kurve zeigt die Betriebscharakteristik (Operational Characteristic) des Übertragungssystems. Diese korrespondiert bei einem Infrarot-Übertragungssystem mit dem Quotienten aus der spektralen Effizienz und der Quadratwurzel von SNR, da die elektrische SNR und die optische Leistung quadratisch voneinander abhängen.

Im Vergleich dazu zeigt die **Figur 9B** die OPC des Krongold-Algorithmus, der für die drahtgebundene DSL optimal ist. Die OPC zeigt einen konkaven Verlauf mit äquidistanten Abschnitten. Die OPC für Infrarot hingegen ist nicht konkav und zeigt auch keine äquidistanten Abschnitte. Da aber der Krongold-Algorithmus für DSL-Systeme ein optimales Ergebnis erbringt, kann für Infrarotsysteme darauf geschlossen werden, dass hier die optimale OPC ebenfalls konkav mit äquidistanten Abschnitten verlaufen sollte. Auf der anderen Seite müssen bei Infrarotsystemen aber die zueinander völlig unterschiedlichen Modulationsformate PPM und QAM berücksichtigt werden (Krongold benutzt nur ein Modulationsformat in unterschiedlicher Ordnung). Bei einem Infrarotsystem kann der Krongold Bit-Loading-Algorithmus unter Erfüllung der optimalen Kriterien also immer nur zumindest zwischen zwei aufeinander folgenden und voneinander separaten Schritten implementiert werden.

Eine Realisierung eines Bit-Loading-Verfahrens zur konkreten Auswahl der Modulationsformate kann so gestaltet sein, dass in einer ersten Stufe A nur das QAM-Modulationsverfahren und in einer zweiten Stufe B nur das PPM-Modulationsverfahren genutzt wird. Die Möglichkeiten des jeweils anderen Modulationsverfahrens werden in beiden Stufen nicht betrachtet. Subträger, die bereits mit einem Modulationsverfahren erfasst wurden, werden nach einer Belegung aller Subträger nicht für eine bessere Umverteilung der Gesamtleistung mit einem noch geringeren Anteil an genutzter Leistung betrachtet.

Die Verteilung der optischen Signalleistung und der Bits unter realen Betriebsbedingungen kann somit nach einer Fortführung des erfindungsgemäßen Signalverarbeitungsverfahren folgendermaßen mit einem Zwei-Stufen-Bit-Loading-Algorithmus erfolgen in:

**Stufe A.** mit einem QAM-Modulationsformat mit einer Auswahl der Symbolkonstellationen aus dem Set [0,2,4,6] auf N Subträgern mit der in diesen Subträger ausreichend vorhandenen optischen Signalleistung und

**Stufe B.** mit einem PPM-Modulationsformat mit einer Auswahl der Symbolkonstellationen aus dem Set [0,1/4,1/2] auf den nach Durchführung von Stufe A aufgrund zu geringer vorhandener optischer Leistung noch freien Subträgern mit der nach Durchführung von Stufe A noch verbliebenen optischen Signalleistung.

Bei dem Zwei-Stufen-Bit-Loading-Algorithmus werden jedoch beide Modulationsverfahren völlig unabhängig voneinander betrachtet. Es wird angenommen $\{N_{QAm}\}=\{N\}$ (die Klammern zeigen dabei an, dass N nicht nur die Anzahl sondern auch das Set der Subträger bezeichnet) und bezüglich der optischen Leistung $P_{QAM}=P_{TOT}$. Zuerst werden alle energetisch möglichen Subträger mit dem QAM-Modulationsformat belegt, die danach noch verbleibenden, geringer energetischen Subträger werden anschließend mit dem PPM-Modulationsformat moduliert. Es können daher keine Fälle bei der Bitverteilung für eine maximale Datenrate berücksichtigt werden, in denen beispielsweise eine Verteilung auf mehrere Subträger mit einer geringeren Komplexitätsordnung eine geringere Leistung benötigt als eine Belegung nur einiger Subträger mit einer höheren Ordnung (vergleiche **Figur 10,** der Fall a wird mit dem Zwei-Stufen-Bit-Loading-Algorithmus erreicht, die Fälle b und c, die eine ggfs. günstigere Leistungsverteilung ermöglichen und dadurch eine höhere Übertragungsrate erreichen können, werden nicht berücksichtigt.). Zur Berücksichtigung solcher Fälle muss eine Belegung jedes Subträgers mit dem QAM- oder PPM-Modulationsformat unterschiedlicher Ordnungen unter zumindest der Beibehaltung der mit dem QAM-Modulationsformat maximal erreichbaren Datenrate in Betracht gezogen werden. Bei der Auswahl der dem jeweiligen Subträger optimal angepassten Symbolkonstellation aus einem vorgegebenen Set von Symbolkonstellationen des PPM- oder des QAM-Verfahrens werden dann die Auswirkungen dieser Auswahl auf die Verteilung der optischen Leistung unter realen Bedingungen berücksichtigt.

Eine Fortführung des Signalverarbeitungsverfahrens nach der Erfindung unter Implementierung eines Bit-Loading-Algorithmus zur Bit- und Leistungsverteilung auf die Subträger unter realen Bedingungen kann daher eine Überprüfung des Einflusses der ausgewählten Symbolkonstellationen gemäß Stufe A und B auf den Ausnutzungsgrad der optischen Signalleistung und damit auf deren Verteilung auf die einzelnen Subträger vorsehen, indem ausgehend von Stufe A solange immer ein Subträger mehr zusätzlich mit einem PPM-Modulationsformat moduliert und die sich ergebende Neuverteilung der optischen Signalleistung ermittelt wird, bis eine diskrete Verteilung mit einer maximalen Ausnutzung der optischen Leistung ermittelt ist, wobei die in Stufe A erreichte maximale Datenrate jeweils durch Wahl anderer Ordnungen des QAM-Modulationsformats erhalten und auf die verbliebenen Subträger aufgeteilt wird. Im Vergleich zu dem Zwei-Stufen-Bit-Loading-Algorithmus kann dieser Algorithmus als "Optimaler-Bit-Loading-Algorithmus" bezeichnet werden, weil er die optimale Leistungsverteilung für den Infrarotkanal angibt.

Dabei wird angenommen: $\{N_{QAM}\} + \{N_{PPM}\} = \{N\}$ und $P_{QAM}+P_{PPM}=P_{TOT}$. Sind die beiden Parameter $N_{QAM}$ und $P_{QAM}$ gefunden, ergeben sich die die Parameter $N_{PPM}$ und $P_{PPM}$ entsprechend. Bei der erforderlichen Iterationsrechnung wird in jedem Durchlauf des Optimalen-Bit-Loading-Algorithmus ein Vektor V errechnet. Dieser Vektor V umfasst alle Zwischen- und Endergebnisse unter Berücksichtigung von beiden Modulationsverfahren, die Lösungsmatrize hat die Größe 2N und besitzt N Spalten für die Subträger und zwei Zeilen für die spektrale Effizienz und die Leistung pro Subträger.

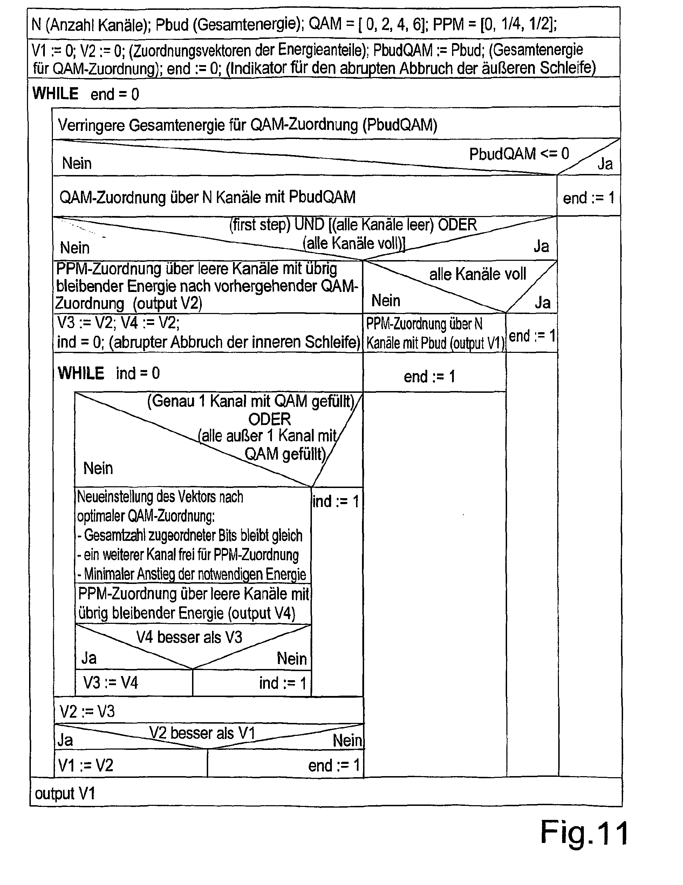

Der Optimale-Bit-Loading-Algorithmus besteht aus einer äußeren und einer inneren Schleife. In der äußeren Schleife wird die zulässige Leistung und in der inneren Schleife die Subträger für das QAM-Modulationsformat als Parameter festgelegt. In der inneren Schleife wird zunächst für jedes angenommene $P_{QAM}$ eine optimale Verteilung auf die Subträger mit QAM- oder PPM-Modulationsformat vorgenommen. Dabei wird die Iterationsrechnung gestartet mit der Annahme $P_{QAM}=P_{TOT}$. In einer inneren Schleife wird diese dann schrittweise pro Durchlauf verringert und jeweils ein neuer Vektor V berechnet. Dabei erfolgt die Berechnung jedes Vektors zunächst nach dem zuvor erläuterten Zwei-Stufen-Bit-Loading-Algorithmus, nach dem zuerst für alle leistungsstarken Kanäle das QAM-Modulationsformat und nur für die restlichen Kanäle das PPM-Modulationsformat gewählt wird. Schrittweise wird dann unter Beibehaltung der mit dem Qam-Modulationsformat erreichten Datenrate pro Iterationsdurchgang der inneren Schleife der ermittelte Vektor in der Weise umverteilt, dass jeweils ein Subträger mehr im PPM-Modulationsformat belegt wird. Stellt sich heraus, dass der neue Vektor eine höhere Datenrate oder eine gleiche Datenrate bei einem niedrigeren Leistungsbedarf bedingt, wird ausgehend von diesem neuen Vektor ein weiterer Durchlauf gestartet, in dem ein weiterer Subträger mit dem PPM-Modulationsformat belegt wird. Ist der errechnete neue Vektor nicht besser als der alte, wird der zuerst berechnete Vektor als Endergebnis genommen und die Iteration abgebrochen. Erst, wenn sich bei der Iteration zeigt, dass die Bit- und Leistungsverteilung über alle Subträger optimal ist, sodass die höchste Datenrate erreicht wird und nur ein minimaler Rest der zur Verfügung stehenden optischen Leistung ungenutzt bleibt, wird die jeweilige Symbolkonstellation des ausgewählten Modulationsverfahrens endgültig eingesetzt und die äußere Schleife mit der Berechnung der Gesamtleistung für die dann mit dem QAM-Modulationsverfahren belegten Subträger abgeschlossen. Ein Flussdiagramm zu dem zuvor erläuterten Optimalen-Bit-Loading- Algorithmus ist der **Figur 11** zu entnehmen.

Ein Vergleich des Zwei-Stufen-Bit-Loading-Algorithmus und des Optimalen-Bit-Loading-Algorithmus hat jedoch gezeigt, dass der Zwei-Stufen-Algorithmus in der Praxis ein sehr zufrieden stellendes Ergebnis erbringt. Daneben hat er aber den großen Vorteil, dass er in Echtzeit implementiert werden kann, wohin der der Optimale-Bit-Loading-Algorithmus eine relativ hohe Rechenzeit benötigt.

**Bezugszeichenliste**

| | |
|---|---|
| **APM** | adaptive Erstmodulation |
| **CE** | Kanalabschätzung |
| **data** | elektrisches Datensignal |
| **DC** | Gleichkomponente |
| **DCB** | Eliminierung der Gleichkomponente |
| **DMTD** | DMT-Demodulation |
| **DMTM** | digitale Signalprozessierung (DMT-Modulation) |
| **EQ** | Datenausgleich |
| **IRWC** | optischer Übertragungskanal |
| **LD** | Lichtquelle |
| **N** | Anzahl Subträger |
| **P** | Signalleistung |
| **PD** | Photodiode |
| **RC** | Rückkanal |
| **Rx** | mobiler Empfänger |
| **Tx** | stationärer Sender |

**Patentansprüche**

1. Verfahren zur dynamischen datenratenadaptiven Datenübertragung von einem stationären Sender (Tx) zu einem mobilen Empfänger (RX) oder umgekehrt in Innenräumen mit einem bidirektional betreibbaren optischen Übertragungskanal (IRWC), welches die folgenden Schritte enthält:

    - Aufteilen eines ersten elektrischen Signalstromes in eine Mehrzahl von N parallelen Signalströmen,
    - Aufmodulieren jedes parallelen Signalstromes auf einen orthogonalen elektrischen Subträger, wobei die Subträger unterschiedliche Frequenzen aufweisen,
    - Konvertieren der N parallelen Signalströme zu einem zweiten elektrischen, seriellen Signalstrom,
    - Verwenden dieses zweiten seriellen Signalstroms zur Intensitätsmodulation einer Infrarotlichtquelle,
    - Empfangen des optischen Signals dieser Infrarotlichtquelle mittels eines Empfängers und Rückkonvertierung des optischen Signals zu dem zweiten seriellen Signalstrom,
    - Demodulieren der N parallelen Signalströme aus dem zweiten, seriellen Signalstrom,
    - jeder der N parallelen Signalströme wird separat prozessiert,
    - mindestens ein Subträger wird als Rückkanal (RC) vom Empfänger (Rx) zum Sender (Tx) verwendet, um Steuerinformationen bezüglich der aktuellen Übertragungsqualität eines jeden Subträgers zu übermitteln,
    - die Datenrate eines jeden der N parallelen Signalströme und das Modulationsformat eines jeden elektrischen Subträgers wird entsprechend der Übertragungsqualität des entsprechenden Subträgers angepasst.

2. Verfahren gemäß Anspruch 1, **dadurch gekennzeichnet, dass** die Mehrzahl paralleler Signalströme mittels einer DMT-Modulation zum zweiten seriellen Signalstrom konvertiert wird.

3. Verfahren gemäß Anspruch 1 oder 2, **dadurch gekennzeichnet, dass** der zweite serielle Signalstrom mittels einer DMT-Demodulation in die Anzahl N paralleler Signalströme zerlegt wird.

4. Verfahren gemäß einem der Ansprüche 1 bis 3, **dadurch gekennzeichnet, dass** der Subträger mit der niedrigsten Frequenz als Rückkanal (RC) vom Empfänger (Rx) zum Sender (Tx) verwendet wird, um Steuerinformationen bezüglich der aktuellen Übertragungsqualität eines jeden Subträgers zu übermitteln.

5. Verfahren nach einem der Ansprüche 1 bis 4, **dadurch gekennzeichnet, dass** die Steuerinformationen bezüglich der aktuellen Übertragungsqualität eines jeden Subträgers einen Wert für das Signal-zu-Rausch-Verhältnis enthalten, welcher mittels einer Entzerrvorrichtung ermittelt wird, welche jeden der N parallelen Signalströme im Empfänger (Rx) verarbeitet.

6. Verfahren gemäß einem der Ansprüche 1 bis 5, **dadurch gekennzeichnet, dass** die Datenrate eines jeden der N parallelen Signalströme und das Modulationsverfahren eines jeden elektrischen Subträgers mittels eines zweistufigen Bit-Loading-Algorithmus ermittelt wird, wobei der Algorithmus folgende Schritte enthält:

- Zuweisen einer QAM-Modulation zu einer Untermenge der N Subträger mit hinreichender optischer Signalleistung und
- Zuweisen eines PPM-Modulationsformats zu den Subträgern, welche nach der Zuweisung des QAM-Modulationsformats noch frei sind.

7. Verfahren gemäß Anspruch 6, **dadurch gekennzeichnet, dass** der Einfluss der gewählten Zuordnung einer QAM- oder einer PPM-Modulation zu den Subträgern auf den Nutzungsgrad der optischen Signalleistung überprüft und durch erneute Zuordnung einer QAM- oder einer PPM-Modulation optimiert wird, indem immer ein Subträger mehr mit einem PPM-Modulationsverfahren moduliert wird, bis eine vorgebbare Datenrate mit minimaler optischer Leistung erreicht oder mit einer vorgebbaren optischen Leistung die maximale Datenrate erreicht wird.

8. Datenübertragungssystem zur dynamischen datenratenadaptiven Datenübertragung mit einem bidirektional betreibbaren optischen Übertragungskanal (IRWC) von einem stationären Sender (Tx) zu einem mobilen Empfänger (Rx) oder umgekehrt in Innenräumen, welches die folgenden Elemente enthält:

- ein stationärer Sender, welcher dazu eingerichtet ist, einen ersten elektrischen Signalstrom zu empfangen, wobei der Sender (Tx) dazu eingerichtet ist, diesen ersten Signalstrom in eine Anzahl N paralleler Signalströme aufzuteilen und jeden dieser Signalströme auf einen orthogonalen elektrischen Subträger zu modulieren, wobei die Datenrate und das Modulationsverfahren eines jeden der N parallelen Signalströme entsprechend der Übertragungsqualität des Subträgers anpassbar ist und die Mehrzahl der N parallelen Signalströme zu einem zweiten seriellen Signalstrom konvertierbar ist und dieser zweite serielle Signalstrom zur Intensitätsmodulation einer Infrarotlichtquelle vorgesehen ist, wobei der Sender (Tx) weiterhin einen Empfänger (Rx) umfasst, welcher dazu eingerichtet ist, Steuerinformationen zu empfangen, welche die aktuelle Übertragungsqualität und Datenrate eines jeden Subträgers kennzeichnen,
- ein mobiler Empfänger (Rx), welcher dazu eingerichtet ist, ein optisches Signal der Infrarotlichtquelle zu empfangen und dieses zu dem zweiten elektrischen, seriellen Signalstrom zu konvertieren, wobei der Empfänger (Rx) weiterhin eine Einrichtung umfasst, um aus dem zweiten seriellen, elektrischen Signalstrom die Anzahl N paralleler Signalströme zu rekonstruieren und jeden dieser parallelen Datenströme separat zu prozessieren, wobei der Empfänger (Rx) weiterhin einen Sender (Tx) umfasst, welcher dazu eingerichtet ist, Steuerinformationen zu übertragen, welche die aktuelle Übertragungsqualität und Datenrate eines jeden Subträgers kennzeichnen, wobei mindestens ein Subträger als Rückkanal (RC) verwendet wird.

9. Stationärer Sender, zur dynamischen datenratenadaptiven Datenübertragung mit einem bidirektional betreibbaren optischen Übertragungskanal (IRWC) in Innenräumen, welcher dazu eingerichtet ist, einen ersten elektrischen Signalstrom zu empfangen, wobei der Sender (Tx) dazu eingerichtet ist, diesen ersten Signalstrom in eine Anzahl N paralleler Signalströme aufzuteilen und jeden dieser Signalströme auf einen orthogonalen elektrischen Subträger zu modulieren, wobei die Datenrate und das Modulationsverfahren eines jeden der N parallelen Signalströme entsprechend der Übertragungsqualität des Subträgers anpassbar ist und die Mehrzahl der N parallelen Signalströme zu einem zweiten seriellen Signalstrom konvertierbar ist und dieser zweite serielle Signalstrom zur Intensitätsmodulation einer Infrarotlichtquelle vorgesehen ist, wobei der Sender (Tx) weiterhin einen Empfänger (Rx) umfasst, welcher dazu eingerichtet ist, Steuerinformationen zu empfangen, welche die aktuelle Übertragungsqualität und Datenrate eines jeden Subträgers kennzeichnen.

10. Sender (Tx) gemäß Anspruch 9, **dadurch gekennzeichnet, dass** dieser eine Einrichtung aufweist, um die Mehrzahl paralleler Signalströme mittels einer DMT-Modulation zum zweiten seriellen Signalstrom zu konvertieren.

11. Sender (Tx) gemäß einem der Ansprüche 9 oder 10, **dadurch gekennzeichnet, dass** dieser dazu eingerichtet ist, die Datenrate eines jeden der N parallelen Signalströme und das Modulationsverfahren eines jeden elektrischen Subträgers mittels eines zweistufigen Bit-Loading-Algorithmus zu ermitteln, wobei der Algorithmus folgende Schritte enthält:

- Zuweisen einer QAM-Modulation zu einer Untermenge der N Subträger mit hinreichender optischer Signalleistung und
- Zuweisen eines PPM-Modulationsformats zu den Subträgern, welche nach der Zuweisung des QAM-Modulationsformats noch frei sind.

**12.** Sender (Tx) entsprechend Anspruch 11, **dadurch gekennzeichnet, dass** dieser eine Einrichtung umfasst, um den Einfluss der gewählten Zuordnung einer QAM- oder einer PPM-Modulation zu den Subträgern auf den Nutzungsgrad der optischen Signalleistung zu überprüfen und durch erneute Zuordnung einer QAM- oder einer PPM-Modulation zu optimieren, indem immer ein Subträger mehr zusätzlich mit einem PPM-Modulationsverfahren moduliert wird, bis eine vorgebbare Datenrate mit minimaler optischer Leistung erreicht oder mit einer vorgebbaren optischen Leistung die maximale Datenrate erreicht wird.

**13.** Mobiler Empfänger (Rx) zur dynamischen datenratenadaptiven Datenübertragung mit einem bidirektional betreibbaren optischen Übertragungskanal (IRWC), welcher dazu eingerichtet ist, ein optisches Signal einer Infrarotlichtquelle zu empfangen und dieses zu dem zweiten elektrischen, seriellen Signalstrom zu konvertieren, wobei der Empfänger (Rx) weiterhin eine Einrichtung umfasst, um aus dem zweiten seriellen, elektrischen Signalstrom die Anzahl N paralleler Signalströme zu rekonstruieren und jeden dieser parallelen Datenströme separat zu prozessieren, wobei der Empfänger (Rx) weiterhin einen Sender (Tx)umfasst, welcher dazu eingerichtet ist, Steuerinformationen zu übertragen, welche die aktuelle Übertragungsqualität und Datenrate eines jeden Subträgers kennzeichnen, wobei mindestens ein Subträger als Rückkanal (RC) verwendet wird, **dadurch gekennzeichnet, dass** dieser dazu eingerichtet ist, den zweiten seriellen Signalstrom mittels einer DMT-Demodulation in die Anzahl N paralleler Signalströme zu zerlegen.

**14.** Empfänger (Rx) entsprechend Anspruch 13, **dadurch gekennzeichnet, dass** der Empfänger (Rx) dazu eingerichtet ist, den Subträger mit der niedrigsten Trägerfrequenz zu ermitteln und diesen als Rückkanal (RC) vom Empfänger (Rx) zum Sender (Tx)zu nutzen.

**15.** Empfänger (Rx) gemäß einem der Ansprüche 13 oder 14, **dadurch gekennzeichnet, dass** dieser einen Entzerrer umfasst, welcher dazu eingerichtet ist, jeden der N parallelen Signalströme zu prozessieren und dabei Steuerinformationen zu generieren, welche Rückschlüsse auf die aktuelle Übertragungsqualität und Datenrate eines jeden Subträgers erlauben.

**Claims**

**1.** Method for the dynamic data-rate adaptive transfer of data signals between a stationary transmitter (Tx) to a mobile receiver (Rx) or vice versa in an interior room by means of a bi-directionally operable optical transfer channel (IRWC), said method comprising the following steps:

- subdividing a first electrical data signal into a plurality of N parallel data signal streams,
- modulating each of said parallel data signal streams onto a respective orthogonal electrical sub-carrier, wherein each of said sub-carriers has a different frequency,
- converting the N parallel data signal streams to a second serial electrical data signal,
- using said second serial electrical data signal for modulating the intensity of an infra-red light source,
- receiving the optical signal of said infra-red light source by means of a receiver and reconversion of the optical signal to the second serial electrical data signal,
- demodulating the plurality of N parallel electrical data signal streams,
- each of said N electrical data signal streams is separately processed,
- at least one sub-carrier is used as a backchannel (RC) from the receiver (Rx) to the transmitter (Tx) in order to transfer control information concerning the current transfer quality of each sub-carrier,
- the data rate of each electrical sub-carrier and the modulation format of each electrical sub-carrier is adapted according to the transfer quality of the respective sub-carrier.

**2.** Method according to claim 1, **characterized in that** the N parallel data signal streams are converted by means of a DMT-modulation to the second serial electrical data signal.

**3.** Method according to any of claim 1 or 2, **characterized in that** the second serial electrical data signal is split into the N parallel data signal streams by means of a DMT-demodulation.

**4.** Method according to any of claims 1 to 3, **characterized in that** the sub-carrier with the lowest frequency is used as a backchannel (RC) from the receiver (Rx) to the sender (Tx) for transferring control information concerning the current transfer quality of each sub-carrier.

5. Method according to any of claims 1 to 4, **characterized in that** the control information concerning the current transfer quality of each sub-carrier comprises a signal-to-noise-ratio, which is obtained from equalizing means which process each of the N parallel data signal streams.

6. Method according to any of claims 1 to 5, **characterized in that** the data rate of each electrical sub-carrier and the modulation format of each electrical sub-carrier is adapted by means of a two-stage bit-loading-algorithm, said algorithm comprising the following steps:

   - Assigning a QAM-modulation to a subset of the N subcarriers having sufficient optical signal power, and
   - Assigning a PPM-modulation to the subcarriers, which are unused after assigning the QAM-modulation.

7. Method according to claim 6, **characterized in that** the influence of the assignment of a QAM- or PPM-modulation to the sub-carriers on the efficiency of the optical signal power is checked and optimized by an amended assignment of a QAM- or PPM-modulation by modulating an increased number of sub-carriers with a PPM-modulation until a predefined data rate is obtained with minimal optical power or a maximum data rate is obtained with a predefined optical power.

8. System for the dynamic data-rate adaptive transfer of data signals between a stationary transmitter (Tx) to a mobile receiver (Rx) or vice versa in an interior room by means of a bi-directionally operable optical transfer channel (IRWC), said system comprising:

   - A stationary sender, being adapted to receive a first electrical data signal, wherein the sender is adapted to split said first data signal into a plurality of N parallel data signal streams and to modulate each of said parallel data signal streams onto a respective orthogonal electrical sub-carrier, wherein the data rate of each electrical sub-carrier and the modulation format of each electrical sub-carrier is adaptable depending on the transfer quality of the respective sub-carrier, and the plurality of N parallel data signal streams is convertible to a second electrical data signal, wherein said second serial data signal is provided for an intensity modulation of an infra-red light source, and wherein the sender (Tx) comprises further a receiver (Rx) being adapted to receive control information concerning the current transfer quality and data rate of each sub-carrier,
   - A mobile receiver (Rx), being adapted to receive an optical signal of said infra-red light source and to convert said signal into said second electrical serial data signal, wherein the receiver (Rx) comprises further means for reconstructing said second serial electrical data signal into the plurality of N parallel data signal streams and to process any of said data signal streams separately, wherein the receiver (Rx) comprises further a sender (Tx) being adapted to send control information concerning the current transfer quality and data rate of each sub-carrier, wherein at least one sub-carrier is used as a backchannel (RC).

9. Stationary sender for the dynamic data-rate adaptive transfer of data signals in an interior room by means of a bi-directionally operable optical transfer channel (IRWC), wherein said sender is adapted to receive a first electrical data signal, and to split said first data signal into a plurality of N parallel data signal streams and to modulate each of said parallel data signal streams onto a respective orthogonal electrical sub-carrier, wherein the data rate of each electrical sub-carrier and the modulation format of each electrical sub-carrier is adaptable depending on the transfer quality of the respective sub-carrier, and the plurality of N parallel data signal streams is convertible to a second electrical data signal, wherein said second serial data signal is provided for an intensity modulation of an infra-red light source, and wherein the sender (Tx) comprises further a receiver (Rx) being adapted to receive control information concerning the current transfer quality and data rate of each sub-carrier

10. Sender (Tx) according to claim 9, **characterized in that** it comprises further means for converting said first data signal into a plurality of N parallel data signal streams by means of a DMT-modulation

11. Sender (Tx) according to any of claims 9 or 10, **characterized in that** the sender is adapted to determine the data rate of each electrical sub-carrier and the modulation format of each electrical sub-carrier by means of a two-stage bit-loading-algorithm, said algorithm comprising the following steps:

   - Assigning a QAM-modulation to a subset of the N sub-carriers having sufficient optical signal power, and
   - Assigning a PPM-modulation to the subcarriers, which are unused after assigning the QAM-modulation

12. Sender (Tx) according to any of claims 9 to 11, **characterized in that** the sender comprises means for checking the influence of the assignment of a QAM- or PPM-modulation to the sub-carriers on the efficiency of the optical signal power and means for optimizing the efficiency by an amended assignment of a QAM- or PPM-modulation, by modulating an increased number of sub-carriers with a PPM-modulation until a predefined data rate is obtained with minimal optical power or a maximum data rate is obtained with a predefined optical power

13. Mobile receiver (Rx) for the dynamic data-rate adaptive transfer of data signals by means of a bi-directionally operable optical transfer channel (IRWC), said receiver being adapted to receive an optical signal of an infra-red light source and to convert said signal into a second electrical serial data signal, wherein the receiver (Rx) comprises further means for reconstructing said second serial electrical data signal into a plurality of N parallel data signal streams and to process any of said data signal streams separately, wherein the receiver (Rx) comprises further a sender (Tx) being adapted to send control information concerning the current transfer quality and data rate of each sub-carrier, wherein at least one sub-carrier is used as a backchannel (RC), **characterized in that** the receiver is adapted to split said second serial electrical data signal into the N parallel data signal streams by means of a DMT-demodulation.

14. Receiver (Tx) according to claim 13, **characterized in that** the receiver is adapted to determine the sub-carrier with the lowest frequency and to use this sub-carrier as a backchannel (RC) from the receiver (Rx) to a sender (Tx).

15. Receiver (Tx) according to any of claims 13 or 14, **characterized in that** the receiver comprises equalizing means being adapted to process each of the N parallel data signal streams, thereby generating control information concerning the current transfer quality and the data rate of each sub-carrier.

## Revendications

1. Procédé pour la transmission dynamique de données avec adaptation au débit des données depuis un émetteur stationnaire (Tx) vers un récepteur mobile (Rx) ou inversement dans des locaux intérieurs avec un canal de transmission optique capable de fonctionner dans les deux directions (IRWC), qui comprend les étapes suivantes :

   - subdivision d'un premier flux de signaux électriques en une pluralité de N flux de signaux parallèles,
   - modulation par superposition de chaque flux de signaux parallèles sur une sous-porteuse électrique orthogonale, de sorte que les sous-porteuses présentent des fréquences différentes,
   - conversion des N flux de signaux parallèles en un second flux de signaux électriques série,
   - utilisation de ce second flux de signaux série pour la modulation d'intensité d'une source lumineuse à infrarouges,
   - réception du signal optique de cette source lumineuse à infrarouges au moyen d'un récepteur et reconversion du signal optique vers le second flux de signaux série,
   - démodulation des N flux de signaux parallèles à partir du second flux de signaux série,
   - traitement séparé des N flux de signaux parallèles,
   - utilisation d'au moins une sous-porteuse à titre de canal de retour (RC) depuis le récepteur (Rx) vers l'émetteur (Tx), afin de transmettre des informations de commande concernant la qualité de transmission actuelle de chaque sous-porteuse,
   - adaptation du débit de données de chacun des N flux de signaux parallèles et du format de modulation de chaque sous-porteuse électrique en correspondance de la qualité de transmission de la sous-porteuse correspondante.

2. Procédé selon la revendication 1, **caractérisé en ce que** la pluralité de flux de signaux parallèles sont convertis au moyen d'une modulation DMT pour donner le second flux de signaux série.

3. Procédé selon la revendication 1 ou 2, **caractérisé en ce que** le second flux de signaux série est décomposé au moyen d'une démodulation DMT pour donner le nombre N de flux de signaux parallèles.

4. Procédé selon l'une des revendications 1 à 3, **caractérisé en ce que** la sous-porteuse présentant la fréquence la plus basse est utilisée comme canal de retour (RC) du récepteur (Rx) vers l'émetteur (Tx), afin de transmettre des informations de commande concernant la qualité de transmission actuelle de chaque sous-porteuse.

5. Procédé selon l'une des revendications 1 à 4, **caractérisé en ce que** les informations de commande concernant la qualité de transmission actuelle de chaque sous-porteuse contiennent une valeur pour le rapport signal/bruit, lequel est déterminé au moyen d'un dispositif de correction qui traite chacun des N flux de signaux parallèles dans le récepteur (Rx).

6. Procédé selon l'une des revendications 1 à 5, **caractérisé en ce que** le débit de données de chacun des N flux de signaux parallèles et le procédé de modulation de chaque sous-porteuse électrique sont déterminés au moyen d'un algorithme de chargement de bits à deux étages, ledit algorithme contenant les opérations suivantes :

- attribution d'une modulation QAM à un sous-ensemble des N sous-porteuses avec puissance de signal optique suffisante, et
- attribution d'un format de modulation PPM aux sous-porteuses, qui sont encore libres après attribution du format de modulation QAM.

7. Procédé selon la revendication 6, **caractérisé en ce que** l'influence de l'attribution choisie d'une modulation QAM ou d'une modulation PPM aux sous-porteuses sur le degré d'utilisation de la puissance des signaux optiques est vérifiée et optimisée par une nouvelle attribution d'une modulation QAM ou d'une modulation PPM, **en ce que** l'on module toujours une sous-porteuse de plus avec un procédé de modulation PPM, jusqu'à atteindre un débit de données prédéterminé avec une puissance optique minimale, ou jusqu'à atteindre le débit de données maximum avec une puissance optique prédéterminée.

8. Système de transmission de données pour la transmission dynamique de données avec adaptation au débit de données, comprenant un canal de transmission optique (IRWC) capable de fonctionner dans les deux directions, depuis un émetteur stationnaire (Tx) vers un récepteur mobile (Rx) ou inversement dans des locaux intérieurs, qui inclut les éléments suivants :

- un émetteur stationnaire, qui est conçu pour recevoir un premier flux de signaux électriques, de sorte que l'émetteur (Tx) est conçu pour subdiviser ce premier flux de signaux en un nombre N de flux de signaux parallèles, et pour moduler chacun de ces flux de signaux sur une sous-porteuse électrique orthogonale, de sorte que le débit de données et le procédé de modulation de chacun des N flux de signaux parallèles sont susceptibles d'être adaptés en correspondance de la qualité de transmission de la sous-porteuse, et la pluralité des N flux de signaux parallèles sont susceptibles d'être convertis en un second flux de signaux série, et ce second flux de signaux série est prévu pour la modulation d'intensité d'une source lumineuse à infrarouges, l'émetteur (Tx) comprenant en outre un récepteur (Rx) et étant conçu pour recevoir des informations de commande qui caractérisent la qualité de transmission actuelle et le débit de données de chaque sous-porteuse,
- un récepteur mobile (Rx) qui est conçu pour recevoir un signal optique de la source lumineuse à infrarouges, et convertir ce signal pour donner le second flux de signaux électriques série, le récepteur (Rx) comprenant encore un système pour reconstruire, à partir du second flux de signaux électriques série, le nombre N de flux de signaux parallèles, et pour traiter séparément chacun de ces flux de données parallèles, de sorte que le récepteur (Rx) comprend en outre un émetteur (Tx), qui est conçu pour transmettre des informations de commande qui caractérisent la qualité de transmission actuelle et le débit de données actuel de chaque sous-porteuse, et au moins une sous-porteuse est utilisée à titre de canal de retour (RC).

9. Émetteur stationnaire, pour la transmission dynamique de données avec adaptation au débit de données, comprenant un canal de transmission optique (IRWC) capable de fonctionner dans les deux directions, dans des locaux intérieurs, lequel est conçu pour recevoir un premier flux de signaux électriques, l'émetteur (Tx) étant conçu pour subdiviser ce premier flux de signaux en un nombre de N flux de signaux parallèles, et de moduler chacun de ces flux de signaux sur une sous-porteuse électrique orthogonale, de sorte que le débit de données et le procédé de modulation de chacun des N flux de signaux parallèles peuvent être adaptés en correspondance de la qualité de transmission de la sous-porteuse, et la pluralité des N flux de signaux parallèles peuvent être convertis en un second flux de signaux série, et ce second flux de signaux série est prévu pour la modulation d'intensité d'une source lumineuse à infrarouges, dans lequel l'émetteur (Tx) comprend en outre un récepteur (Rx) qui est conçu pour recevoir des informations de commande qui caractérisent la qualité de transmission actuelle et le débit de données actuel de chaque sous-porteuse.

10. Émetteur (Tx) selon la revendication 9, **caractérisé en ce que** celui-ci comprend un système destiné à convertir la pluralité de flux de signaux parallèles au moyen d'une modulation DMT pour donner le second flux de signaux série.

11. Émetteur (Tx) selon l'une des revendications 9 août 10, **caractérisé en ce que** celui-ci est conçu pour déterminer le débit de données de chacun des N flux de signaux parallèles et le procédé de modulation de chaque sous-porteuse électrique au moyen d'un algorithme de chargement de bits à deux étages, tel que l'algorithme contient les opérations suivantes :

- attribution d'une modulation QAM à un sous-ensemble des N sous-porteuses avec une puissance de signaux optiques suffisante, et
- attribution d'un format de modulation PPM aux sous-porteuses qui sont encore libres après attribution du format de modulation QAM.

**12.** Émetteur (Tx) selon la revendication 11, **caractérisé en ce que** celui-ci comprend un système pour vérifier l'influence de l'association choisie d'une modulation QAM ou d'une modulation PPM aux sous-porteuses sur le degré d'utilisation de la puissance de signaux optiques et, de l'optimiser par nouvelle association d'une modulation QAM ou d'une modulation PPM, en modulant toujours une sous-porteuse de plus additionnellement avec un procédé de modulation PPM, jusqu'à atteindre un débit de données prédéterminé avec une puissance optique minimale ou d'atteindre le débit de données maximum avec une puissance optique prédéterminée.

**13.** Récepteur mobile (Rx) pour la transmission dynamique de données avec adaptation au débit de données comprenant un canal de transmission optique (IRWC) capable de fonctionner dans les deux directions, qui est conçu pour recevoir un signal optique d'une source lumineuse à infrarouges et pour convertir celui-ci dans le second flux de signaux électriques série, dans lequel le récepteur (Rx) comprend en outre un système afin de reconstruire, à partir du second flux de signaux électriques série, le nombre N de flux de signaux parallèles, et de traiter séparément chacun de ces flux de données parallèle, tel que le récepteur (Rx) comprend en outre un émetteur (Tx) qui est conçu pour transmettre des informations de commande qui caractérisent la qualité de transmission actuelle et le débit de données actuel de chaque sous-porteuse, et au moins une sous-porteuse est utilisée à titre de canal de retour (RC), **caractérisé en ce que** celui-ci est conçu pour décomposer le second flux de signaux série au moyen d'une démodulation DMT dans le nombre N de flux de signaux parallèles.

**14.** Récepteur (Rx) selon la revendication 13, **caractérisé en ce que** le récepteur (Rx) est conçu pour déterminer la sous-porteuse présentant la fréquence porteuse la plus basse, et pour utiliser celle-ci à titre de canal de retour (RC) depuis le récepteur (Rx) vers l'émetteur (Tx).

**15.** Récepteur (Rx) selon l'une des revendications 13 ou 14, **caractérisé en ce que** celui-ci comprend un correcteur qui est conçu pour traiter chacun des N flux de signaux parallèles et pour générer ici des informations de commande qui permettent des conclusions quant à la qualité de transmission actuelle et au débit de données actuel de chaque sous-porteuse.

Fig.1

Fig.2

Stand der Technik

Rx Winkel d.Richtwirkung $\Psi$ [ ° ]

Rx – Tx Horizontalabstand $r$ [m]

Stand der Technik

Fig.3

Fig.4

Fig.5

Fig.6

Fig.7

Stand der Technik

Fig.8

Fig.9A

Stand der Technik Fig.9B

Fig.10

N (Anzahl Kanäle); Pbud (Gesamtenergie); QAM = [ 0, 2, 4, 6]; PPM = [0, 1/4, 1/2];

V1 := 0; V2 := 0; (Zuordnungsvektoren der Energieanteile); PbudQAM := Pbud; (Gesamtenergie für QAM-Zuordnung); end := 0; (Indikator für den abrupten Abbruch der äußeren Schleife)

**WHILE** end = 0

Verringere Gesamtenergie für QAM-Zuordnung (PbudQAM)

PbudQAM <= 0 — Nein / Ja

| Nein | Ja |
| --- | --- |
| QAM-Zuordnung über N Kanäle mit PbudQAM | end := 1 |

(first step) UND [(alle Kanäle leer) ODER (alle Kanäle voll)] — Nein / Ja

Nein:
PPM-Zuordnung über leere Kanäle mit übrig bleibender Energie nach vorhergehender QAM-Zuordnung (output V2)

Ja:
alle Kanäle voll — Nein / Ja

| Nein | Ja |
| --- | --- |
| PPM-Zuordnung über N Kanäle mit Pbud (output V1) | end := 1 |

| V3 := V2; V4 := V2;  ind = 0; (abrupter Abbruch der inneren Schleife) | PPM-Zuordnung über N Kanäle mit Pbud (output V1) | end := 1 |
| --- | --- | --- |

| **WHILE** ind = 0 | end := 1 |
| --- | --- |

(Genau 1 Kanal mit QAM gefüllt) ODER (alle außer 1 Kanal mit QAM gefüllt) — Nein / Ja

| Nein | ind := 1 |
| --- | --- |
| Neueinstellung des Vektors nach optimaler QAM-Zuordnung:<br>- Gesamtzahl zugeordneter Bits bleibt gleich<br>- ein weiterer Kanal frei für PPM-Zuordnung<br>- Minimaler Anstieg der notwendigen Energie<br>PPM-Zuordnung über leere Kanäle mit übrig bleibender Energie (output V4) | |

V4 besser als V3 — Ja / Nein

| Ja | Nein |
| --- | --- |
| V3 := V4 | ind := 1 |

V2 := V3

V2 besser als V1 — Ja / Nein

| Ja | Nein |
| --- | --- |
| V1 := V2 | end := 1 |

output V1

Fig.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **V. Jungnickel et al.** A Physical Model of the Wireless Infrared Communication Channel. *IEEE Journal on Selected Areas in Communications,* April 2002, vol. 20 (3), 631-640
- **H. Hashemi et al.** Indoor Propagation Measurements at Infrared Frequencies for Wireless Local Area Networks Applications. *Proc. of Vehicular Technology Conference,* August 1994, vol. 43 (3), 562-576
- **J.B. Carruthers et al.** Angle Diversity for Nondirected Wireless Infrared Communication. *IEEE Transactions on Communications,* Juni 2000, vol. 48 (6), 960-969
- **V. Jungnickel et al.** Electronic Tracking for Wireless Infrared Communications. *IEEE Transactions of Wireless Communications,* September 2003, vol. 2 (5), 989-999
- **L. Diana et al.** Rate-Adaptive Modulation Techniques for Infrared Wireless Communication. *Proc. of IEEE Intl. Conf. on Communications,* Juni 1999, 597-603
- **J.M. Garrido-Balsells et al.** Performance Evaluation of Rate-Adaptive Transmission Techniques for Optical Wireless Communication. *Proc. of Vehicular Technology Conference,* 2004, 914-918
- **M. Matsuo et al.** Rate-Adaptive Indoor Infrared Wireless Communications systems Using Punctured Convolutional Codes and Adaptive PPM. *Ninth IEEE International Symposium on Personal, Indoor and Mobile Radio Communications,* 08. September 1998, vol. 2, 693-697
- **A.Tavares et al.** Angle diversity and rate adaptive transmission for indoor wireless optical communications. *Communications Magazine,* Marz 2003, vol. 41 (3), 64-73
- **Th. Keller et al.** Adaptive Multicarrier Modulation: A Convenient Framework for Time-frequency Processing in Wireless Communications. *IEEE Proc. of the IEEE,* Mai 2000, vol. 88 (5), 611-640
- **B. S. Krongold ; K. Ramchandran ; D. L. Jones.** Computationally Efficient Optimal Power allocation Algorithms for Multicarrier Communication Systems. *IEEE Trans. on Communications,* 2000, vol. 48 (1), 1018-1022